(19) **Europäisches Patentamt European Patent Office Office européen des brevets**

(11) **EP 3 010 177 B1**

(12) **FASCICULE DE BREVET EUROPEEN**

(45) Date de publication et mention de la délivrance du brevet:
**25.07.2018 Bulletin 2018/30**

(51) Int Cl.:
***H04L 9/32*** (2006.01)  ***H04L 9/00*** (2006.01)
***H04L 29/06*** (2006.01)

(21) Numéro de dépôt: **15189617.2**

(22) Date de dépôt: **13.10.2015**

(54) **PROCÉDÉ D'AUTHENTIFICATION D'UN DISPOSITIF CLIENT AUPRÈS D'UN SERVEUR À L'AIDE D'UN ÉLÉMENT SECRET**

**AUTHENTIFIZIERUNGSVERFAHREN EINES CLIENT-GERÄTS BEI EINEM SERVER MITHILFE EINES GEHEIMEN ELEMENTS**

**METHOD FOR AUTHENTICATING A CLIENT DEVICE WITH A SERVER USING A SECRET ELEMENT**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.10.2014 FR 1459804**

(43) Date de publication de la demande:
**20.04.2016 Bulletin 2016/16**

(73) Titulaire: **Morpho**
**92130 Issy-les-Moulineaux (FR)**

(72) Inventeurs:
• **BRINGER, Julien**
**92130 ISSY LES MOULINEAUX (FR)**
• **CHABANNE, Hervé**
**92130 ISSY LES MOULINEAUX (FR)**
• **CIPIERE, Olivier**
**92130 ISSY-LES-MOULINEAUX (FR)**
• **HUGEL, Rodolphe**
**92130 ISSY LES MOULINEAUX (FR)**

• **LESCUYER, Roch**
**92130 ISSY-LES-MOULINEAUX (FR)**

(74) Mandataire: **Regimbeau**
**20, rue de Chazelles**
**75847 Paris Cedex 17 (FR)**

(56) Documents cités:
• **YANJIANG YANG ET AL: "A New Approach for Anonymous Password Authentication", COMPUTER SECURITY APPLICATIONS CONFERENCE, 2009. ACSAC '09. ANNUAL, IEEE, PISCATAWAY, NJ, USA, 7 décembre 2009 (2009-12-07), pages 199-208, XP031610110, DOI: 10.1109/ACSAC.2009.26 ISBN: 978-0-7695-3919-5**
• **CHRISTOPH HERBST ET AL: "An AES Smart Card Implementation Resistant to Power Analysis Attacks", 1 janvier 2006 (2006-01-01), APPLIED CRYPTOGRAPHY AND NETWORK SECURITY LECTURE NOTES IN COMPUTER SCIENCE;;LNCS, SPRINGER, BERLIN, DE, PAGE(S) 239 - 252, XP019034418, ISBN: 978-3-540-34703-3 * le document en entier ***

**Description**

DOMAINE DE L'INVENTION

La présente invention concerne de façon générale l'authentification d'un client auprès d'un serveur.

L'invention concerne plus précisément un procédé d'authentification sécurisée à l'aide d'un élément secret protégé contre la compromission du serveur ou du client.

ETAT DE LA TECHNIQUE

Dans le cadre des procédés d'authentification existants, un client apporte généralement à un serveur une preuve de son identité en fournissant un élément secret qui lui est propre, tel qu'un mot de passe ou un code PIN. Afin de vérifier la validité de l'élément secret envoyé par un client, le serveur peut stocker, éventuellement de manière chiffrée, les éléments secrets des clients enrôlés auprès de lui.

En cas de compromission du serveur, un attaquant accédant à la mémoire de celui-ci pourrait prendre connaissance des éléments secrets stockés en clair et les utiliser de manière frauduleuse pour se faire passer auprès du serveur pour les clients dont il a obtenu l'élément secret. En cas de stockage sous forme chiffrée, l'exploitation du contenu de la mémoire par un attaquant est plus difficile mais pas impossible. De plus l'élément secret d'un client peut apparaitre sous forme déchiffrée dans la mémoire du serveur au cours de son authentification. L'espionnage du contenu de la mémoire du serveur par un attaquant pendant l'exécution de l'authentification permet alors à l'attaquant de prendre connaissance de l'élément secret du client en cours d'authentification.

Afin de rendre l'authentification insensible à une compromission du serveur, certains procédés proposent de stocker l'élément secret de l'utilisateur dans la mémoire du client et de vérifier localement la connaissance de cet élément secret par l'utilisateur. Néanmoins de tels procédés sont sensibles à une compromission de la mémoire du client. D'autant plus que celui-ci est généralement un équipement léger, tel qu'un téléphone mobile ou un ordinateur personnel, souvent moins bien sécurisé qu'un équipement tel qu'un serveur de données d'entreprise.

Par ailleurs les procédés d'authentification existants peuvent être sensibles aux attaques par rejeu dans lesquels un attaquant réutilise des données précédemment transmises par un client et se fait passer pour ce client auprès d'un serveur. Ces données peuvent par exemple avoir été obtenues par une attaque du type man-in-the-middle par laquelle l'attaquant intercepte les communications entre le client et un serveur.

Il existe ainsi un besoin d'un procédé d'authentification permettant à un client de prouver à un serveur sa connaissance d'un élément secret tout en étant insensible à une compromission de la mémoire du client ou du serveur et aux attaques par rejeu, sans nécessiter une puissance de calcul importante qui rendrait sa mise en oeuvre difficile sur un client tel qu'un téléphone mobile.

Y. Yang et al., "A New Approach for Anonymous Password Authentication", Computer Security Applications Conférence (ACSAC) 2009, expose un procédé d'authentification anonyme utilisant une technique de preuve à divulgation nulle basée sur le chiffrement homomorphique.

RESUME DE L'INVENTION

A cet effet, la présente invention se rapporte ainsi selon un premier aspect à un procédé d'authentification d'un dispositif client auprès d'un serveur à l'aide d'un élément secret connu uniquement du dispositif client, ledit dispositif client détenant un jeton d'authentification généré à l'aide d'une fonction pseudo-homomorphique et à partir dudit élément secret, ledit procédé comprenant des étapes de :

- génération, par le dispositif client, d'une preuve de connaissance de l'élément secret à partir d'une clé de génération de preuve masquée avec une première donnée de masque, ladite première donnée de masque étant une donnée aléatoire non publique connue uniquement du dispositif client et ladite clé de génération de preuve masquée étant fonction dudit élément secret,
- transmission, au serveur, par le dispositif client de ladite preuve de connaissance de l'élément secret générée,
- transmission au serveur par le dispositif client du jeton d'authentification masqué à l'aide de la première donnée de masque,
- vérification par le serveur de la validité du jeton d'authentification masqué reçu,
- vérification par le serveur de la validité de la preuve de connaissance par une preuve à divulgation nulle de connaissance prouvant la connaissance dudit élément secret par le dispositif client sans le divulguer.

Le serveur peut ainsi vérifier que le dispositif client dispose bien d'un jeton d'authentification, et que le dispositif client a connaissance de l'élément secret qui a servi à générer ce jeton d'authentification, sans que le jeton d'authentification ne soit dévoilé grâce à l'utilisation de la première donnée de masque.

Dans un mode de mise en oeuvre du procédé selon le premier aspect, ce procédé peut comprendre en outre une étape d'obtention par le serveur d'une clé de vérification de preuve associée à ladite clé de génération de preuve. L'étape de vérification de la validité de la preuve de connaissance comprend alors une vérification par le serveur de la validité de la preuve de connaissance à l'aide de la clé de vérification de preuve obtenue. Selon une variante de mise en oeuvre, le serveur vérifie la validité de la preuve de connaissance à partir du jeton d'authentification masqué reçu.

Un tel jeton d'authentification peut comprendre un jeton de chiffrement obtenu par chiffrement à partir dudit élément secret à l'aide d'une fonction de chiffrement pseudo-homomorphique.

Dans un mode de mise en oeuvre du procédé selon le premier aspect, le jeton d'authentification comprend en outre un jeton de signature correspondant au résultat de la signature du jeton de chiffrement à l'aide d'une fonction de signature pseudo-homomorphique,

- l'étape de transmission du jeton d'authentification masqué comprend la transmission, par le dispositif client, au serveur, du jeton de chiffrement détenu masqué à l'aide de la première donnée de masque et la transmission, par le dispositif client, au serveur, du jeton de signature détenu masqué à l'aide de la première donnée de masque;
- l'étape de vérification du jeton d'authentification masqué comprend la vérification, par le serveur, de la validité de la signature du jeton de signature masqué reçu à partir du jeton de chiffrement masqué reçu.

Dans un mode de mise en oeuvre du procédé d'authentification selon le premier aspect:

- l'étape de génération d'une preuve de connaissance de l'élément secret comprend la transmission d'un défi (« challenge ») par le serveur au dispositif client, et la génération, par le dispositif client, d'une donnée de signature obtenue en signant le défi reçu à l'aide de ladite clé de génération de preuve masquée,
- l'étape de transmission au serveur par le dispositif client de ladite preuve de connaissance de l'élément secret comprend la transmission, par le dispositif client, de ladite donnée de signature au serveur.

Dans un mode de mise en oeuvre du procédé d'authentification selon le premier aspect:

- l'étape de transmission du jeton d'authentification masqué comprend la transmission, par le dispositif client, au serveur, du jeton de chiffrement détenu masqué à l'aide de la première donnée de masque,
- l'étape d'obtention de la clé de vérification de preuve à partir du jeton d'authentification masqué reçu comprend le déchiffrement, par le serveur, du jeton de chiffrement masqué reçu à l'aide de la fonction de chiffrement pseudo-homomorphique de sorte à obtenir une clé de vérification de preuve,
- l'étape de vérification de la validité de la preuve de connaissance comprend la vérification, par le serveur, de la validité de la signature de la donnée de signature reçue à l'aide de la clé de vérification de preuve obtenue.

Le serveur peut ainsi vérifier que le dispositif client dispose bien d'un jeton de chiffrement et du jeton de signature associé, et que le dispositif client a connaissance de l'élément secret qui a servi à générer ce jeton de chiffrement, sans que le jeton de chiffrement ni le jeton de signature ne soient dévoilés grâce à l'utilisation de la première donnée de masque.

Lors d'une phase d'enrôlement préalable, ledit procédé d'authentification selon le premier aspect peut comprendre des étapes de :

- détermination de l'élément secret par le dispositif client et,
- génération des jetons de chiffrement et de signature.

Dans un premier mode de mise en oeuvre, lors de la phase d'enrôlement, l'étape de détermination de l'élément secret peut comprendre la sélection de l'élément secret par un client détenteur du dispositif client et l'étape de génération du jeton de chiffrement peut comprendre la génération du jeton de chiffrement par le dispositif client.

L'élément secret reste ainsi inconnu du serveur, protégeant le procédé d'authentification contre une compromission de la mémoire de celui-ci.

Dans un deuxième mode de mise en oeuvre, lors de la phase d'enrôlement, l'étape de détermination de l'élément secret peut comprendre la sélection de l'élément secret par un client détenteur du dispositif client et la transmission de l'élément secret sélectionné au serveur, et les étapes de génération des jetons de chiffrement et de signature peuvent comprendre la génération du jeton de chiffrement et du jeton de signature par le serveur et la transmission de ces jetons au dispositif client.

La mise en oeuvre de la phase d'enrôlement auprès d'un serveur de confiance est ainsi rendue plus simple et ne nécessite aucun calcul de la part du dispositif client.

L'étape de génération d'un jeton de chiffrement peut comprendre le calcul d'un hash de l'élément secret à partir d'une fonction de hachage et le chiffrement dudit hash à l'aide de la fonction de chiffrement pseudo-homomorphique.

L'élément secret n'est ainsi utilisé lors de la génération du jeton de chiffrement que sous forme d'un hash ce qui limite les risques qu'un attaquant puisse retrouver l'élément secret à partir du jeton de chiffrement en cas de compromission de la mémoire du dispositif client.

Dans un troisième mode de mise en oeuvre, l'étape de génération du jeton de chiffrement peut comprendre la génération par le serveur d'un élément secret temporaire, la génération d'un jeton de chiffrement temporaire à partir de l'élément secret temporaire, la transmission de l'élément secret temporaire et du jeton de chiffrement temporaire au dispositif client et la génération par le dispositif client d'un jeton de chiffrement à partir du jeton de chiffrement temporaire, de l'élément secret temporaire et de l'élément secret,

et l'étape de génération du jeton de signature peut comprendre la génération par le serveur d'un jeton de signature temporaire en signant le jeton de chiffrement temporaire, la transmission du jeton de signature temporaire au dispositif client et la génération par le dispositif client d'un jeton de signature à partir du jeton de signature temporaire, de l'élément secret temporaire et de l'élément secret.

Ce mode de mise en oeuvre permet au dispositif client d'obtenir un élément secret de son choix et les jetons de chiffrement et de signature correspondants sans transmettre au serveur aucun de ces éléments, limitant ainsi les risques d'interception ou de réutilisation de ces données suite à une compromission de la mémoire du serveur.

La génération du jeton de chiffrement temporaire peut comprendre le calcul d'un hash de l'élément secret temporaire à partir d'une fonction de hachage et le chiffrement dudit hash à l'aide de la fonction de chiffrement pseudo-homomorphique.

L'étape de calcul d'un hash d'un élément secret peut comprendre le calcul d'un hash dudit élément secret et d'au moins un élément secret supplémentaire à partir d'une fonction de hachage.

Ceci permet d'imposer à un utilisateur souhaitant s'authentifier la détention d'un élément secret supplémentaire, éventuellement lié à un élément matériel, limitant ainsi davantage les risques d'usurpation d'identité.

La génération d'un jeton de chiffrement C à partir d'un élément secret $\sigma$ peut être réalisée à l'aide de la formule suivante : $C = Enc(g^P)$ avec g un générateur d'un groupe d'ordre élevé et $P = h(s, \sigma)$ avec s un nombre aléatoire (sel), h une fonction de hachage, $\sigma$ pouvant être égal à l'élément secret (PIN) ou à un élément secret temporaire et Enc la fonction de chiffrement pseudo-homomorphique.

Lors de la phase d'enrôlement :

- l'étape de génération du jeton de chiffrement peut être réalisée par le dispositif client ;
- et l'étape de génération du jeton de signature peut comprendre :

  - le masquage dudit jeton de chiffrement à l'aide d'une deuxième donnée de masque $\alpha$ aléatoire et connue uniquement du dispositif client,
  - la transmission au serveur dudit jeton de chiffrement masqué ;
  - la génération par le serveur d'une deuxième donnée de signature en signant le jeton de chiffrement masqué reçu à l'aide de la fonction de signature pseudo-homomorphique;
  - la transmission par le serveur de la deuxième donnée de signature au dispositif client;

  ledit jeton de signature étant obtenu à partir de ladite deuxième donnée de signature à l'aide de la deuxième donnée de masque.

Ceci permet de faire générer par le serveur une donnée de signature permettant au dispositif client d'obtenir un jeton de signature correspondant à son jeton de chiffrement, sans divulguer ce jeton de chiffrement, limitant ainsi les risques d'attaque par rejeu en cas d'interception des communications entre le dispositif client et le serveur.

Ledit dispositif client peut vérifier la validité de la signature de ladite deuxième donnée de signature.

Ceci permet de détecter une éventuelle corruption de la donnée de signature, que ce soit du fait d'une erreur au moment de sa génération ou d'un problème lors de sa transmission. Le dispositif client s'assure ainsi que la validité du jeton de signature obtenu pourra être vérifiée lors de la phase d'authentification afin d'éviter de se retrouver dans une situation où il ne pourrait pas s'authentifier faute de jeton de signature valide.

Les fonctions de chiffrement et de signature peuvent être des fonctions asymétriques.

Lors d'une phase d'initialisation le procédé d'authentification selon le premier aspect peut comprendre la mise en oeuvre par le serveur des étapes de :

- génération d'une paire de clés asymétriques de signature pour mettre en oeuvre la fonction de signature pseudo-homomorphique;
- génération d'une paire de clés asymétriques de chiffrement pour mettre en oeuvre la fonction de chiffrement pseudo-homomorphique;

- transmission de la clé publique de chiffrement de ladite paire de clés asymétriques de chiffrement et de la clé publique de signature de ladite paire de clés asymétriques de signature de sorte à ce que le dispositif client réalise les chiffrements et puisse vérifier les jetons de signature émis par le serveur à l'aide desdites clés publiques et que le serveur réalise les déchiffrements et génère les jetons de signature à l'aide des clé privées desdites paires de clés asymétriques.

Lesdites clés de chiffrement et/ou de signature peuvent être associées à un identifiant du client détenteur du dispositif client

L'usurpation d'identité par un attaquant est ainsi rendue plus difficile puisque l'authentification nécessitera d'employer les jetons de chiffrement et de signature correspondant à l'identité dont il se réclame.

Dans une première variante de mise en oeuvre, lesdites clés de chiffrement et/ou de signature sont mises en correspondance avec un identifiant du client détenteur du dispositif client dans une base de données.

Une telle variante permet au serveur de déterminer facilement quelles clés utiliser lors de l'authentification d'un certain dispositif client.

Dans une deuxième variante de mise en oeuvre, lesdites clés de chiffrement et/ou de signature sont dérivées à partir d'un hash de l'identifiant du client détenteur du dispositif client.

Une telle variante permet de conserver secrète la correspondance entre l'identité d'un client et les clés associées même en cas de compromission de la mémoire du serveur.

Selon un autre mode de mise en oeuvre, le jeton d'authentification peut être généré en outre à l'aide d'une clé secrète d'utilisateur.

Un tel mode de mise en oeuvre permet au serveur de vérifier lors d'une authentification que le jeton fourni par un dispositif client a bien été généré à l'aide de la clé secrète d'utilisateur associée à ce dispositif client, rendant ainsi le jeton d'authentification d'un dispositif client inutilisable par un autre dispositif.

Le jeton d'authentification peut être obtenu par chiffrement de la clé secrète d'utilisateur et de la clé de génération de preuve à l'aide d'une deuxième fonction de chiffrement pseudo-homomorphique.

Ce jeton permet ainsi à la fois de prouver la connaissance de la clé de génération de preuve et de prouver que le dispositif client fournissant le jeton pour s'authentifier est bien le même que celui pour lequel le jeton a été généré.

Le dispositif client peut détenir en outre un premier jeton chiffré obtenu par chiffrement de la clé secrète d'utilisateur à l'aide d'une première fonction de chiffrement pseudo-homomorphique et comprenant en outre une étape de transmission par le dispositif client au serveur du premier jeton chiffré.

Ceci permet au serveur lors de l'authentification de vérifier la cohérence du jeton d'authentification avec ce premier jeton chiffré supplémentaire, rendant plus difficile toute utilisation frauduleuse du jeton d'authentification.

Le procédé d'authentification selon le premier aspect peut alors comprendre une étape de détermination d'un premier paramètre par le dispositif client et d'un deuxième jeton chiffré obtenu par chiffrement de la clé secrète d'utilisateur et dudit premier paramètre à l'aide de la première fonction de chiffrement pseudo-homomorphique et une étape de transmission par le dispositif client au serveur du deuxième jeton chiffré.

L'étape de génération d'une preuve de connaissance de l'élément secret du procédé selon le premier aspect peut comprendre la transmission d'un défi par le serveur au dispositif client, et la génération par le dispositif client d'une donnée de signature obtenue à partir du premier paramètre, d'une première valeur de hash et de la clé de génération de preuve masquée, ladite première valeur de hash étant obtenue à partir du défi reçu, du premier jeton chiffré, du jeton d'authentification masqué à l'aide de la première donnée de masque et du deuxième jeton chiffré, l'étape de transmission au serveur par le dispositif client de ladite preuve de connaissance de l'élément secret du procédé selon le premier aspect peut alors comprendre la transmission par le dispositif client, de ladite donnée de signature au serveur.

Ceci permet de lier la clé secrète d'utilisateur k et le premier paramètre t, correspondant à un élément de la preuve de connaissance de l'élément secret, dans le second jeton chiffré. La vérification de cette preuve de connaissance, et donc l'authentification de l'utilisateur, nécessite ainsi que le dispositif client fournisse au serveur quatre éléments (la preuve de connaissance, le jeton d'authentification et les premier et deuxième jetons chiffrés) cohérents, c'est-à-dire correspondant au même élément secret P, à la même clé secrète k, au même premier paramètre t et à la même donnée de masquage $\beta$.

Dans un tel mode de mise en oeuvre, les étapes de vérification par le serveur de la validité du jeton d'authentification masqué reçu et de la validité de la preuve de connaissance peuvent comprendre :

- le calcul d'une deuxième valeur de hash à partir du défi, du premier jeton chiffré, du jeton d'authentification masqué et du deuxième jeton chiffré reçus ;
- le calcul d'un premier jeton déchiffré par déchiffrement du premier jeton chiffré à l'aide de la première fonction de chiffrement pseudo-homomorphique;
- le calcul d'une clé de vérification de preuve par déchiffrement du jeton d'authentification masqué à l'aide de la deuxième fonction de chiffrement pseudo-homomorphique;
- le calcul d'un deuxième jeton déchiffré par déchiffrement du deuxième jeton chiffré à l'aide la première fonction de chiffrement pseudo-homomorphique;
- la vérification de la validité du jeton d'authentification masqué reçu et de la preuve de connaissance à partir de la donnée de signature reçue, du premier jeton déchiffré, du deuxième jeton déchiffré, de la deuxième valeur de hash et de la clé de vérification de preuve.

Le serveur vérifie ainsi simultanément la validité du jeton d'authentification J et de la preuve de connaissance Z, ces opérations de vérification apportant la preuve que le dispositif utilisateur dispose bien du bon élément secret et que les éléments fournis correspondent bien à la même clé secrète d'utilisateur.

La présente invention se rapporte selon un deuxième aspect à un produit programme d'ordinateur comprenant des instructions de code de programme pour l'exécution des étapes du procédé selon le premier aspect lorsque ledit programme est exécuté sur un ordinateur.

La présente invention se rapporte selon un troisième aspect à un système comprenant au moins un dispositif client et un serveur d'authentification du dispositif client à l'aide d'un élément secret connu uniquement du dispositif client, ledit dispositif client étant configuré pour :

- détenir un jeton d'authentification généré à l'aide d'une fonction pseudo-homomorphique et à partir dudit élément secret,
- générer une preuve de connaissance de l'élément secret à partir d'une clé de génération de preuve masquée avec une première donnée de masque, ladite première donnée de masque étant une donnée aléatoire non publique connue uniquement du dispositif client et ladite clé de génération de preuve masquée étant fonction dudit élément secret,
- transmettre au serveur ladite preuve de connaissance de l'élément secret générée,
- transmettre au serveur le jeton d'authentification masqué à l'aide de la première donnée de masque,

ledit serveur étant configuré pour :

- recevoir ladite preuve de connaissance de l'élément secret générée à partir de la clé de génération de preuve masquée avec une première donnée de masque et transmise par le dispositif client, ,
- recevoir le jeton d'authentification masqué à l'aide de la première donnée de masque,
- vérifier la validité du jeton d'authentification masqué reçu,
- vérifier la validité de la preuve de connaissance par une preuve à divulgation nulle de connaissance prouvant la connaissance dudit élément secret par le dispositif client sans le divulguer.

De tels produit programme d'ordinateur, et système présentent les mêmes avantages que ceux évoqués pour les procédés selon le premier aspect.

DESCRIPTION DES FIGURES

D'autres caractéristiques et avantages ressortiront encore de la description qui suit, laquelle est purement illustrative et non limitative et doit être lue en regard des figures annexées, parmi lesquelles :

La figure 1 illustre un ordinogramme représentant les différentes phases d'un procédé d'authentification selon l'invention.
La figure 2 illustre un ordinogramme représentant un mode de mise en oeuvre d'une phase d'authentification d'un procédé d'authentification selon l'invention.
La figure 3 illustre un ordinogramme représentant un mode de mise en oeuvre d'une phase d'initialisation d'un procédé d'authentification selon l'invention.
La figure 4 illustre un ordinogramme représentant un premier mode de mise en oeuvre d'une phase d'enrôlement d'un procédé d'authentification selon l'invention.
La figure 5 illustre un ordinogramme représentant un deuxième mode de mise en oeuvre d'une phase d'enrôlement d'un procédé d'authentification selon l'invention.
La figure 6 illustre un ordinogramme représentant un troisième mode de mise en oeuvre d'une phase d'enrôlement d'un procédé d'authentification selon l'invention.
La figure 7 illustre un ordinogramme représentant un premier mode de mise en oeuvre d'une phase d'authentification d'un procédé d'authentification selon l'invention.

La figure 8 illustre un ordinogramme représentant un second mode de mise en oeuvre d'une phase d'authentification d'un procédé d'authentification selon l'invention.

La figure 9 illustre un ordinogramme représentant un troisième mode de mise en oeuvre d'une phase d'authentification d'un procédé d'authentification selon l'invention.

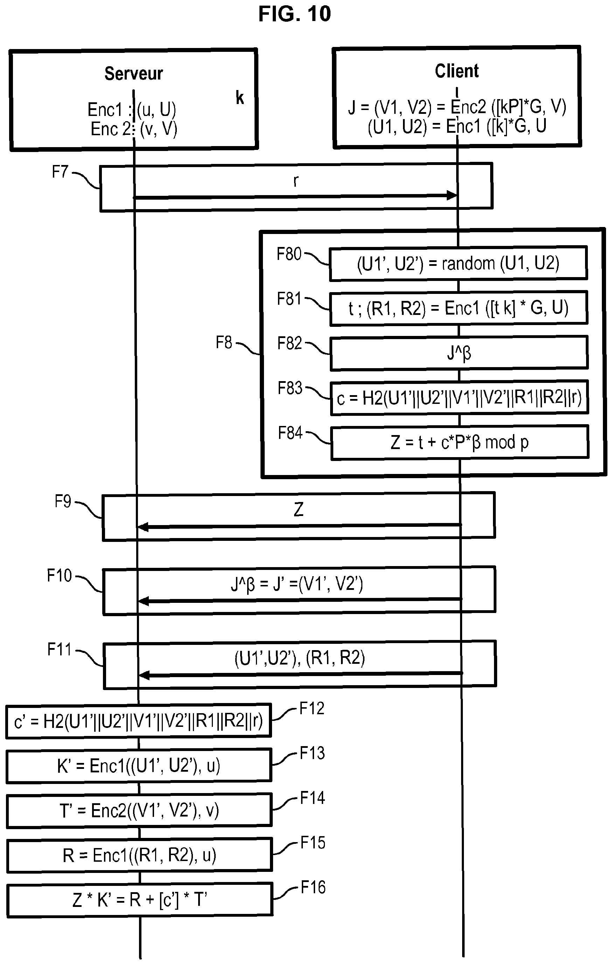

La figure 10 illustre un ordinogramme représentant un mode de mise en oeuvre dans lequel le jeton d'authentification est généré à base de double chiffrement pseudo-homomorphique sur courbes elliptiques.

## DESCRIPTION DETAILLEE D'AU MOINS UN MODE DE REALISATION

Un mode de mise en oeuvre concerne un procédé d'authentification d'un dispositif client auprès d'un serveur d'authentification à l'aide d'un élément secret tel qu'un ou plusieurs mots de passe, un code PIN, une clé, une donnée biométrique, ou une clé dérivée d'une autre donnée comme une donnée biométrique, un identifiant d'utilisateur ou un identifiant de mobile. Un tel élément secret sera génériquement noté PIN dans le reste de ce document.

Afin de protéger le processus d'authentification du dispositif client auprès du serveur d'authentification contre la compromission et les attaques par rejeu, ce mode de mise en oeuvre a pour but de permettre au dispositif client de prouver sa connaissance d'un élément secret particulier sans le dévoiler, sans le stocker en mémoire, et sans que le serveur d'authentification ait connaissance de cet élément secret particulier.

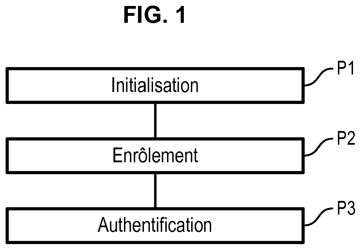

Pour cela, comme illustré en **figure 1,** dans une phase d'initialisation préliminaire P1, le serveur génère les éléments (clés, entiers, vecteurs...) nécessaires à la mise en oeuvre des phases ultérieures d'enrôlement et d'authentification.

Lors de la phase d'enrôlement P2, le client s'enrôle auprès d'un serveur d'enrôlement et obtient un jeton d'authentification J généré à partir dudit élément secret PIN. Le serveur d'authentification peut être distinct du serveur d'enrôlement ou confondu avec celui-ci. Dans les paragraphes suivants, les deux serveurs sont supposés confondus.

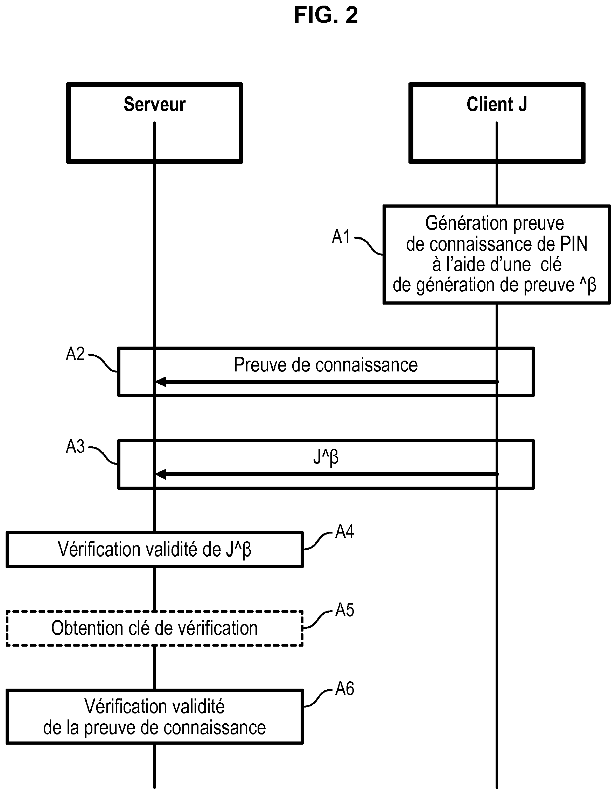

Puis, dans une phase d'authentification P3, le dispositif client s'authentifie auprès du serveur en prouvant sa connaissance dudit élément secret PIN sans le divulguer. Pour cela, comme représenté en **figure 2,** ladite phase d'authentification P3 comprend une étape de génération de preuve de connaissance A1 au cours de laquelle le dispositif client génère une preuve de connaissance de l'élément secret PIN générée à l'aide d'une clé de génération de preuve masquée avec une première donnée de masque β, ladite première donnée de masque étant une donnée aléatoire non publique connue uniquement du dispositif client et ladite clé de génération de preuve masquée étant construite de sorte à prouver la connaissance dudit élément secret PIN sans le divulguer.

Ladite phase d'authentification P3 comprend également une première étape de transmission A2 au cours de laquelle le dispositif client transmet au serveur ladite preuve de connaissance de l'élément secret générée.

Selon une variante, la phase d'authentification peut comprendre plusieurs transmissions de données entre le dispositif client et le serveur pour aboutir à la transmission au serveur de la preuve de connaissance de l'élément secret. A titre d'exemple, le dispositif client peut générer une première partie de la preuve de connaissance, puis la transmettre au serveur. Celui-ci peut ensuite envoyer un challenge au dispositif client et celui-ci peut ensuite générer une deuxième partie de la preuve de connaissance à partir de ce challenge et la transmettre au serveur.

Ladite phase d'authentification P3 comprend également une seconde étape de transmission A3 au cours de laquelle le dispositif client transmet au serveur le jeton d'authentification J masqué à l'aide de la première donnée de masque β.

La première étape de transmission A2 et la seconde étape de transmission A3 peuvent être confondues, la preuve de connaissance et le jeton d'authentification étant alors transmis en même temps au serveur par le dispositif client.

Ladite phase d'authentification P3 comprend également une première étape de vérification A4 au cours de laquelle le serveur vérifie la validité du jeton d'authentification masqué reçu.

Ladite phase d'authentification P3 comprend enfin une seconde étape de vérification A6 au cours de laquelle le serveur vérifie la validité de la preuve de connaissance. Cette vérification peut être réalisée à partir du jeton d'authentification masqué reçu.

Ladite phase d'authentification P3 peut comprendre également une étape d'obtention A5 au cours de laquelle le serveur obtient une clé de vérification de preuve associée à ladite clé de génération de preuve. L'étape de vérification A6 de la validité de la preuve de connaissance comprend alors une vérification par le serveur de la validité de la preuve de connaissance à l'aide de la clé de vérification de preuve.

Le jeton d'authentification est envoyé par le dispositif client au serveur de manière masquée de façon à ce que personne, pas même le serveur, ne puisse le réutiliser lors d'une authentification ultérieure pour se faire passer pour le dispositif client.

Ainsi le dispositif client peut, grâce à la preuve de connaissance, prouver sans le dévoiler sa connaissance de l'élément secret auquel le jeton d'authentification correspond. Le dispositif client peut également prouver la validité du jeton d'authentification.

Le jeton d'authentification J peut être stocké dans la mémoire interne du dispositif client ou dans une mémoire externe connectée au dispositif client par le biais d'une connexion locale telle qu'une connexion USB ou une connexion réseau. Le jeton d'authentification de l'utilisateur peut ainsi être stocké partiellement ou totalement sur un emplacement de stockage en réseau partagé entre plusieurs dispositifs clients appartenant au même utilisateur.

Le jeton d'authentification J peut être généré à l'aide d'une fonction pseudo-homomorphique de plusieurs façons et différentes mises en oeuvre en découlent et sont décrites ci-dessous.

Une fonction pseudo-homomorphique f est une fonction compatible avec le masquage telle que, pour une opération de masquage M comme la multiplication par une donnée de masque a, il existe une opération O, comme l'exponentiation par a, telle que $O(f(x))= f(M(x))$, c'est-à-dire $(f(x))^a = f(x*a)$. Une telle fonction peut également être homomorphique entre deux opérations Op1 et Op2 si effectuer l'opération Op2 sur $(f(x), f(y))$ permet d'obtenir $f(x\ Op1\ y)$.

### 1er mode de mise en oeuvre dans lequel le jeton d'authentification est généré à partir de fonctions de chiffrement et de signature pseudo-homomorphiques :

Selon un premier mode de mise en oeuvre de génération de jeton d'authentification, le jeton d'authentification J peut comprendre un jeton de chiffrement C obtenu par chiffrement à partir dudit élément secret PIN à l'aide d'une fonction de chiffrement pseudo-homomorphique Enc. Il peut également comprendre en outre un jeton de signature S correspondant au résultat de la signature du jeton de chiffrement C à l'aide d'une fonction de signature pseudo-homomorphique Sign.

#### Phase d'initialisation

Plus précisément, lors d'une phase d'initialisation préliminaire, le serveur peut commencer par générer les clés nécessaires aux fonctions de chiffrement et de signature, ces dernières pouvant être des fonctions asymétriques.

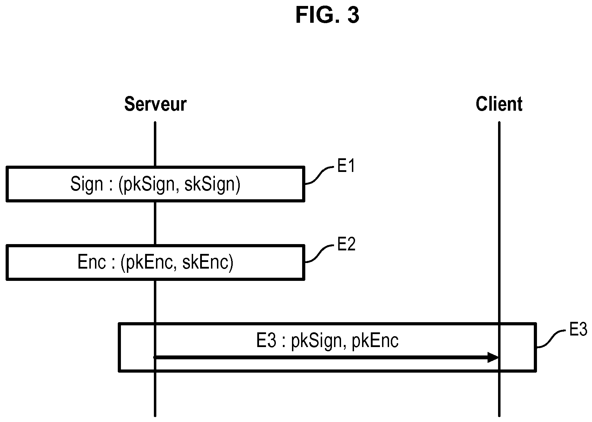

En référence à la **figure 3,** lors d'une première étape de génération de clés E1, le serveur peut générer une paire de clés asymétriques de signature (pkSign, skSign) dédiées à la mise en oeuvre de l'algorithme de signature pseudo-homomorphique Sign. Un tel algorithme de signature peut être un algorithme multiplicativement homomorphique tel que l'algorithme Gennaro selon la référence suivante : Rosario Gennaro, Jonathan Katz, Hugo Krawczyk, Tal Rabin, Secure network coding over the integers, Public Key Cryptography 2010, 142-160.

Lors d'une deuxième étape de génération de clés E2, le serveur peut générer une paire de clés asymétriques de chiffrement (pkEnc, skEnc) dédiées à la mise en oeuvre de l'algorithme de chiffrement pseudo-homomorphique Enc. Un tel algorithme peut par exemple être l'algorithme El Gamal ou l'algorithme Paillier selon les références suivantes : Taher El Gamal, A public-key cryptosystem and a signature scheme based on discrete logarithms, IEEE Transactions on Information Theory 31 (4), 469-472, doi:10.1109/TIT.1985.1057074, CRYPTO'84, 10-18 et Pascal Paillier, Public-key cryptosystems based on composite degree residuosity classes, EUROCRYPT 1999, 223-238.

Lors d'une étape de transmission de clés E3, le serveur peut transmettre au dispositif client la clé publique de chiffrement de ladite paire de clés asymétriques de chiffrement pkEnc et la clé publique de signature de ladite paire de clés asymétriques de signature pkSign. Alternativement, lorsque l'algorithme de chiffrement n'est destiné à être mis en oeuvre que par le serveur, celui-ci ne transmet au dispositif client que la clé publique de signature.

Le dispositif client dispose ainsi d'une clé de signature lui permettant de vérifier la validité des jetons de signature générés par le serveur. Le client peut également disposer d'une clé de chiffrement lui permettant de générer un jeton de chiffrement déchiffrable par le serveur.

Le serveur dispose des clés privées correspondantes lui permettant respectivement de générer des jetons de signature et de déchiffrer des jetons de chiffrement.

Selon un mode de mise en oeuvre, les clés de chiffrement et/ou de signature peuvent être associées à un identifiant du client détenteur du dispositif client. Une telle association renforce la protection du procédé d'authentification contre les attaques en imposant par exemple qu'un jeton de chiffrement utilisé par un dispositif client ait été généré avec la clé de chiffrement associée à ce dispositif client, sinon les opérations d'authentification réalisées côté serveur se solderont par un échec et le dispositif client ne sera pas authentifié.

Pour ce faire, lesdites clés de chiffrement et/ou de signature peuvent être mises en correspondance avec un identifiant du client détenteur du dispositif client dans une base de données pouvant être stockées dans des moyens de stockage du serveur. Alternativement, lesdites clés de chiffrement et/ou de signature peuvent être dérivées à partir d'un hash fonction de l'identifiant du client détenteur du dispositif client, évitant ainsi d'avoir à stocker la correspondance en dur au niveau du serveur. Un tel hash peut être généré par une fonction de hachage sur des entiers ou sur des courbes elliptiques.

#### Phase d'enrôlement

Le procédé peut ensuite se poursuivre par une phase d'enrôlement du dispositif client auprès du serveur d'enrôlement au cours de laquelle le dispositif client obtient le jeton d'authentification J.

Cette phase peut comprendre une étape de détermination d'un élément secret par le dispositif client E4 et une étape de génération d'un jeton de chiffrement E5 et une étape de génération d'un jeton de signature E6.

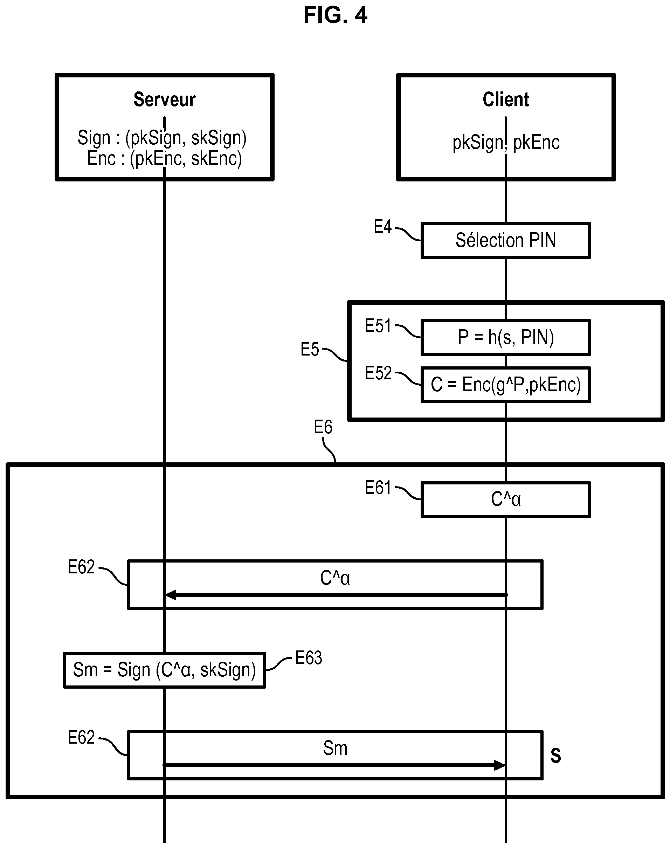

Selon un premier mode de mise en oeuvre représenté en **figure 4,** l'étape de détermination de l'élément secret E4 comprend la sélection de l'élément secret par un client détenteur du dispositif client et l'étape de génération du jeton de chiffrement E5 comprend la génération du jeton de chiffrement par le dispositif client.

Plus précisément, l'étape de génération du jeton de chiffrement E5 peut comprendre une première étape de calcul d'un hash E51 au cours de laquelle un hash de l'élément secret est calculé par le dispositif client à partir d'une fonction de hachage. A titre d'exemple, le dispositif client calcule un hash $P=h(s,PIN)$ avec h une fonction de hachage, s un nombre aléatoire appelé sel et PIN l'élément secret choisi par le client lors de l'étape de détermination de l'élément secret E4.

Alternativement, la première étape de calcul d'un hash E51 peut comprendre le calcul d'un hash dudit élément secret et d'au moins un élément secret supplémentaire à partir d'une fonction de hachage. Un tel élément secret supplémentaire peut par exemple être une clé supplémentaire ou un élément lié à la configuration du dispositif client tel qu'une chaine de caractères dérivée de la configuration matérielle du dispositif client, d'une adresse d'une donnée particulière en mémoire etc...

L'étape de génération du jeton de chiffrement E5 peut ensuite comprendre une première étape de chiffrement E52 au cours de laquelle le dispositif client génère un jeton de chiffrement en chiffrant une donnée fonction de l'élément secret PIN choisi à l'aide de sa clé publique de chiffrement pkEnc dédiée à la mise en oeuvre de la fonction de chiffrement Enc. A titre d'exemple, le dispositif client peut générer un jeton de chiffrement C égal à $Enc(g^P, pkEnc)$ avec P le hash calculé lors de la première étape de calcul d'un hash E51 et g un générateur d'un groupe d'ordre élevé. Le dispositif client dispose ainsi d'une version chiffrée de l'élément secret choisi.

Le générateur g peut être le même pour tous les dispositifs clients ou bien être spécifique à un dispositif client donné. Dans ce dernier cas, la correspondance entre le générateur g choisi pour chaque client et l'identité de chaque client peut être stockée dans une base de données côté serveur ou bien le générateur g peut être généré par encodage de point sur courbe elliptique.

Cette génération du jeton de chiffrement est suivie de la génération d'un jeton de signature correspondant. Dans ce premier mode de mise en oeuvre, l'étape de génération d'un jeton de signature E6 peut comprendre une première étape de masquage E61 au cours de laquelle le dispositif client masque le jeton de chiffrement C à l'aide d'une deuxième donnée de masque $\alpha$. Cette deuxième donnée de masque est une donnée aléatoire connue uniquement du dispositif client. Le jeton de chiffrement masqué peut être noté $C^\alpha$. De par la propriété d'homomorphisme de la fonction de chiffrement Enc, ce jeton de chiffrement masqué correspond au résultat du chiffrement de l'élément secret masqué par la deuxième donnée de masque $\alpha$.
On a en effet :

$$C^\alpha = (Enc(g^P))^\alpha = Enc((g^P)^\alpha) = Enc(g^{(P*\alpha)})$$

L'étape de génération d'un jeton de signature E6 peut ensuite comprendre une première étape de transmission de jeton E62 au cours de laquelle le dispositif client transmet au serveur le jeton de chiffrement masqué $C^\alpha$.

L'étape de génération d'un jeton de signature E6 peut ensuite comprendre une première étape de génération de signature E63 au cours de laquelle le serveur génère une deuxième donnée de signature Sm en signant le jeton de chiffrement masqué reçu à l'aide de sa clé privée de signature skSign. On a alors : $Sm= Sign(C^\alpha, skSign)$.

L'étape de génération d'un jeton de signature E6 peut ensuite comprendre une deuxième étape de transmission de jeton E64 au cours de laquelle le serveur transmet au client la deuxième donnée de signature Sm.

Selon une première variante, le dispositif client obtient ensuite un jeton de signature S en démasquant la deuxième donnée de signature Sm avec la deuxième donnée de masque $\alpha$ et stocke le jeton de signature démasqué $S=Sign(C, skSign)$ en mémoire.

Selon une deuxième variante, le dispositif client stocke en mémoire la deuxième donnée de signature Sm et la deuxième donnée de masque $\alpha$. Le dispositif client est alors capable, lorsque nécessaire, de démasquer la deuxième donnée de signature Sm pour obtenir le jeton de signature démasqué S.

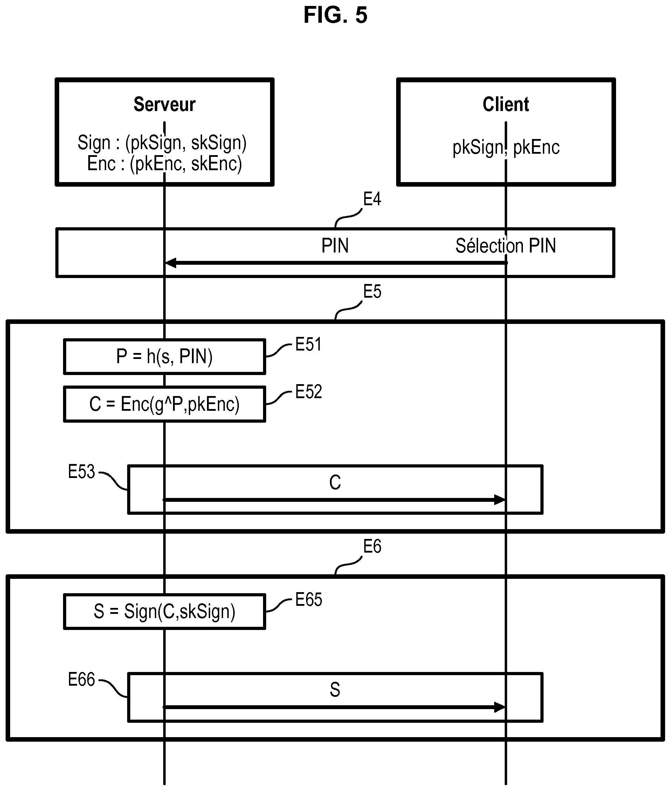

Selon un deuxième mode de mise en oeuvre représenté en **figure 5,** l'enrôlement du dispositif client est réalisée auprès d'un serveur d'enrôlement de confiance pouvant prendre connaissance de l'élément secret choisi par le client. L'étape de détermination de l'élément secret E4 comprend alors la sélection de l'élément secret par un client détenteur du dispositif client et la transmission de l'élément secret sélectionné au serveur, sous forme masquée ou chiffrée, et les étapes de génération des jetons de chiffrement E5 et de signature E6 comprennent la génération du jeton de chiffrement et du jeton de signature par le serveur et la transmission de ces jetons au dispositif client.

Plus précisément, l'étape de génération du jeton de chiffrement E5 peut comprendre une première étape de calcul d'un hash E51 et une première étape de chiffrement E52 similaires à celles décrites ci-dessus dans le premier mode de réalisation mais mises en oeuvre par le serveur d'enrôlement. Alternativement, lors de la première étape de chiffrement E52, le jeton de chiffrement généré par le serveur d'enrôlement peut dépendre d'une clé secrète k du serveur d'enrôlement. Par exemple le jeton de chiffrement peut être égal à $C = Enc (g^{(P*k)})$. Optionnellement, une telle clé peut dépendre de l'identité du client. L'étape de génération du jeton de chiffrement E5 peut également comprendre une troisième étape de transmission de jeton E53 au cours de laquelle le serveur transmet au dispositif client le jeton de chiffrement généré au cours de la première étape de chiffrement E52. Selon une alternative, le jeton de chiffrement transmis peut être accompagné d'un élément supplémentaire C2 dépendant de la clé secrète k du serveur d'enrôlement. Par exemple, cet élément supplémentaire peut être égal à $C2 = Enc2 (g^k)$, Enc2 étant un algorithme de chiffrement utilisant une clé de chiffrement éventuellement différente de celle utilisée par l'algorithme Enc.

L'étape de génération d'un jeton de signature E6 peut comprendre une deuxième étape de génération de signature E65 au cours de laquelle le serveur génère un jeton de signature S en signant le jeton de chiffrement C généré lors de l'étape de génération du jeton de chiffrement E5 à l'aide de sa clé privée de signature skSign. On a alors : $S= Sign(C, skSign)$. L'étape de génération d'un jeton de signature E6 peut ensuite comprendre une quatrième étape de transmission de jeton E66 au cours de laquelle le serveur transmet au client le jeton de signature S généré.

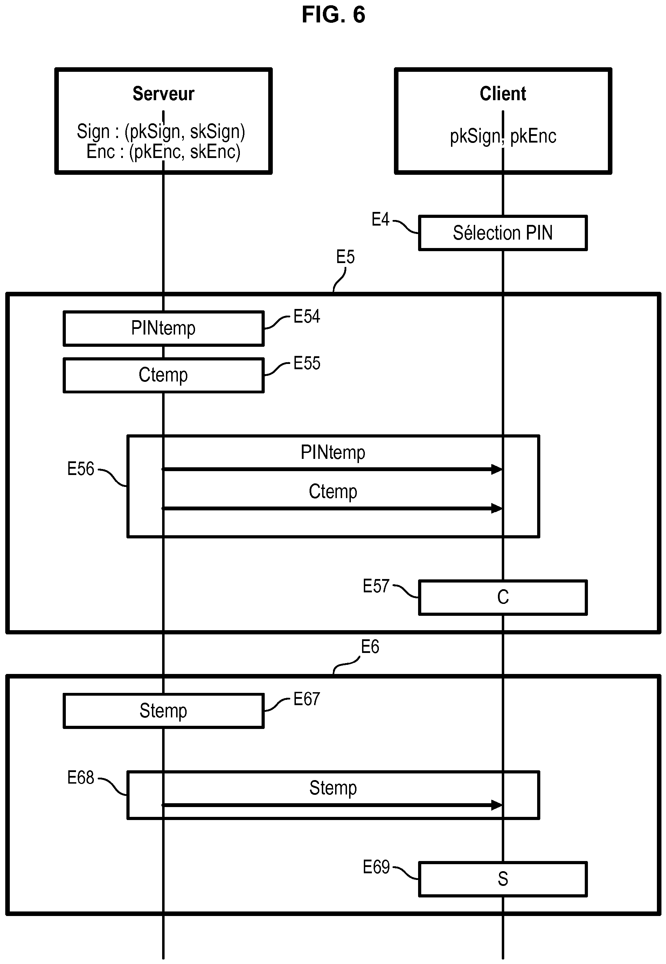

Dans un troisième mode de mise en oeuvre représenté en **figure 6**, l'étape de génération du jeton de chiffrement E5 peut comprendre la génération par le serveur d'un élément secret temporaire, la génération d'un jeton de chiffrement temporaire à partir de l'élément secret temporaire, la transmission de l'élément secret temporaire et du jeton de chiffrement temporaire au dispositif client et la génération par le dispositif client d'un jeton de chiffrement à partir du jeton de chiffrement temporaire, de l'élément secret temporaire et de l'élément secret (PIN) choisi par le client lors de l'étape de détermination de l'élément secret E4. De plus l'étape de génération du jeton de signature E6 peut comprendre la génération par le serveur d'un jeton de signature temporaire en signant le jeton de chiffrement temporaire, la transmission du jeton de signature temporaire au dispositif client et la génération par le dispositif client d'un jeton de signature à partir du jeton de signature temporaire, de l'élément secret temporaire et de l'élément secret (PIN). Le dispositif client peut ainsi générer lui-même ses jetons de chiffrement et de signature correspondant à son élément secret PIN à partir des jetons temporaires transmis par le serveur.

Plus précisément, l'étape de génération du jeton de chiffrement E5 peut comprendre une étape de génération d'élément secret temporaire E54 au cours de laquelle le serveur génère un élément secret temporaire PINtemp, par exemple aléatoire. L'étape de génération du jeton de chiffrement E5 peut ensuite comprendre une première étape de génération de jeton temporaire E55 au cours de laquelle le serveur génère un jeton de chiffrement temporaire Ctemp à partir de l'élément secret temporaire PINtemp, et éventuellement d'un élément secret supplémentaire comme décrit ci-dessus. Pour cela, le serveur peut générer un hash $Ptemp=h(s,PINtemp)$ à partir de l'élément secret temporaire PINtemp de manière similaire au calcul de hash mis en oeuvre lors de la première étape de calcul d'un hash E51 décrite ci-dessus, puis le serveur peut générer le jeton de chiffrement $Ctemp= Enc(g^{Ptemp}, pkEnc)$ à partir du hash calculé de manière similaire à la génération de jeton de chiffrement mise en oeuvre lors de la première étape de chiffrement E52 décrite ci-dessus. L'étape de génération du jeton de chiffrement E5 peut ensuite comprendre une cinquième étape de transmission de jeton E56 au cours de laquelle le serveur transmet l'élément secret temporaire PINtemp et le jeton de chiffrement temporaire Ctemp au dispositif client. L'étape de génération du jeton de chiffrement E5 peut enfin comprendre une première étape de dérivation de jeton E57 au cours de laquelle le dispositif client dérive un jeton de chiffrement C correspondant à son élément secret PIN à partir du jeton de chiffrement temporaire Ctemp, de l'élément secret temporaire PINtemp et de l'élément secret PIN choisi par le client lors de l'étape de détermination de l'élément secret E4. Grace à la propriété d'homomorphisme de la fonction de chiffrement Enc, le dispositif client peut en effet remplacer l'élément secret temporaire PINtemp par l'élément secret PIN dans le jeton de chiffrement Ctemp. A titre d'exemple on a : $C= Ctemp^{(P/Ptemp)} = (Enc(g^{Ptemp}, pkEnc))^{(P/Ptemp)} = Enc((g^{Ptemp})^{(P/Ptemp)}, pkEnc) = Enc(g^P, pkEnc)$.

L'étape de génération du jeton de signature E6 peut comprendre une deuxième étape de génération de jeton temporaire E67 au cours de laquelle le serveur génère un jeton de signature temporaire Stemp à partir du jeton de chiffrement temporaire Ctemp. Pour cela, le serveur peut signer le jeton de chiffrement temporaire à l'aide de sa clé privée de signature skSign pour générer un jeton de signature temporaire $Stemp = Sign(Ctemp, skSign)$ de manière similaire à la génération de jeton de signature mise en oeuvre lors de la deuxième étape de génération de signature E65 décrite ci-dessus. L'étape de génération du jeton de signature E6 peut ensuite comprendre une sixième étape de transmission de jeton E68 au cours de laquelle le serveur transmet le jeton de signature temporaire Stemp au dispositif client. L'étape de génération du jeton de signature E6 peut enfin comprendre une deuxième étape de dérivation de jeton E69 au cours de laquelle le dispositif client dérive un jeton de signature S correspondant à son élément secret PIN à partir du jeton de signature temporaire Stemp, de l'élément secret temporaire PINtemp et de l'élément secret PIN choisi par le client lors de l'étape de détermination de l'élément secret E4. Grace à la propriété d'homomorphisme de la fonction de signature Sign, le dispositif client peut en effet remplacer l'élément secret temporaire PINtemp par l'élément secret PIN dans le jeton de signature Stemp En effet on a : $S= Stemp^{(P/Ptemp)} = (Sign(Ctemp, skSign))^{(P/Ptemp)} = Si$-

gn((Ctemp)^(P/Ptemp), skSign) = Sign(C, skSign).

A l'issue de la phase d'enrôlement, après la mise en oeuvre des étapes de génération du jeton de chiffrement E5 et de génération du jeton de signature E6, le dispositif client peut disposer d'un jeton de chiffrement C correspondant au résultat du chiffrement de son élément secret PIN à l'aide d'une fonction de chiffrement pseudo-homomorphique Enc ainsi que d'un jeton de signature S correspondant au résultat de la signature par le serveur d'enrôlement du jeton de chiffrement C à l'aide d'une fonction de signature pseudo-homomorphique Sign, ou d'une deuxième donnée de signature Sm et d'une deuxième donnée de masque $\alpha$ lui permettant de générer le jeton de signature S.

Le dispositif client peut vérifier la validité de la signature du jeton de signature S ou de la deuxième donnée de signature Sm reçu à l'aide de la clé publique de signature pkSign transmise par le serveur.

*Phase d'authentification*

Le procédé selon l'invention peut ensuite se poursuivre par une phase d'authentification du dispositif client auprès du serveur d'authentification.

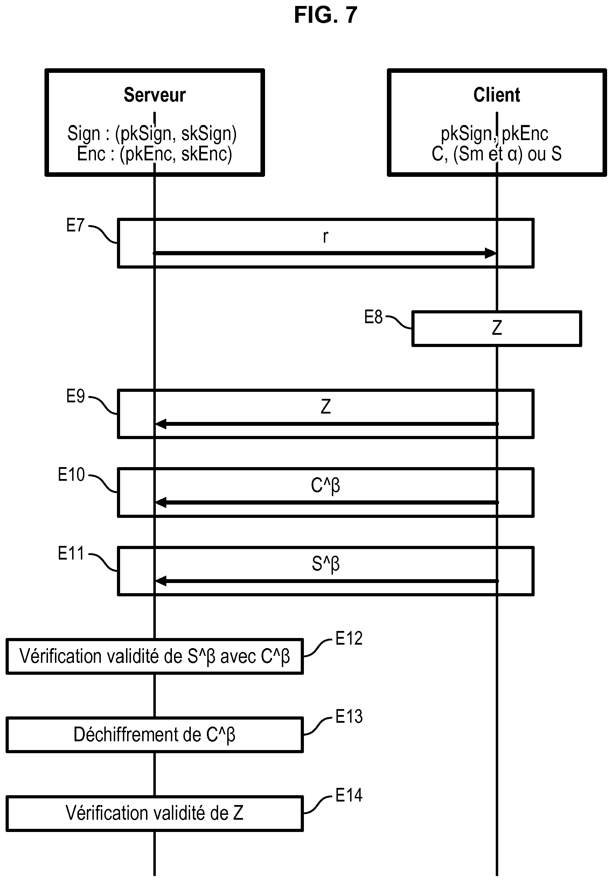

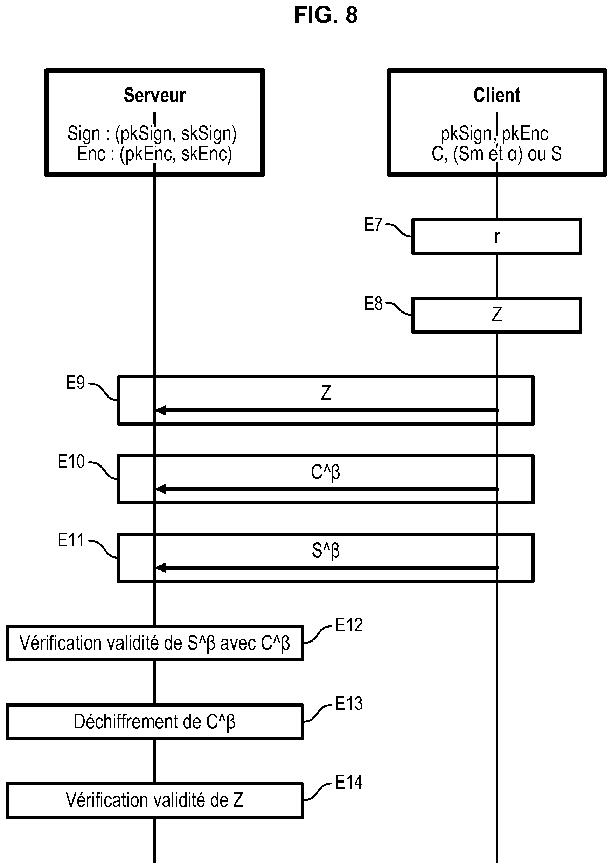

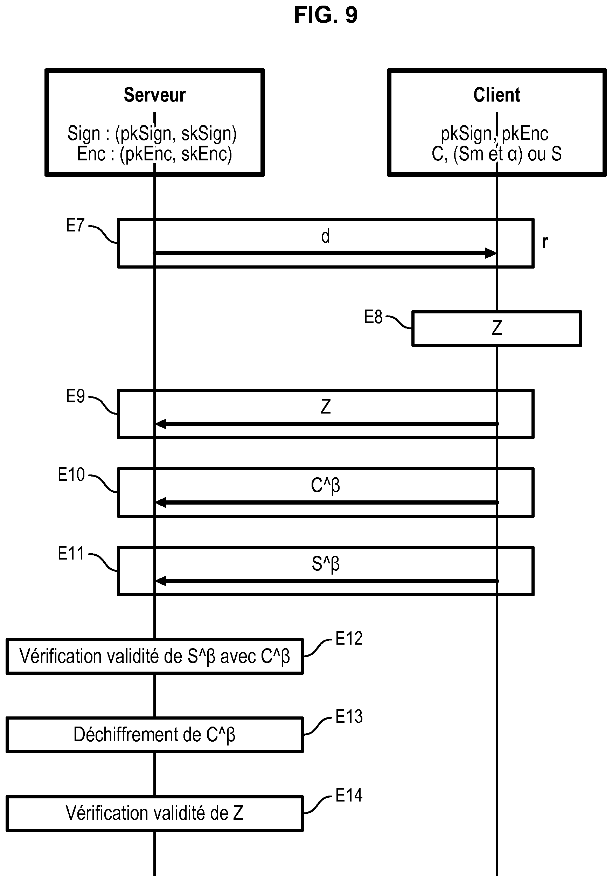

Selon une première variante décrite en **figure 7** l'étape de génération de preuve de connaissance A1 peut comprendre une étape de transmission de défi E7 au cours de laquelle le serveur transmet au dispositif client un défi r. Selon une deuxième variante, décrite en **figure 8,** l'étape de génération de preuve de connaissance A1 peut comprendre une étape de détermination de message E7 au cours de laquelle le dispositif client détermine un message r à partir de l'identité du client et d'un horodatage. Le dispositif client peut également déterminer un compteur d'authentification. Selon une troisième variante, décrite en **figure 9,** l'étape de génération de preuve de connaissance A1 peut comprendre une étape de transmission de défi et de détermination de message E7 au cours de laquelle le serveur transmet au dispositif client un défi d et le dispositif client détermine un message r à partir du défi d reçu, de l'identité du client et d'un horodatage.

La phase d'authentification peut ensuite comprendre une troisième étape de génération de signature E8 au cours de laquelle le dispositif client génère une donnée de signature Z en signant le défi ou message r à l'aide d'une clé de génération de preuve masquée avec une donnée aléatoire non publique connue uniquement du dispositif client, dite première donnée de masque $\beta$, ladite clé masquée permettant de prouver la connaissance de l'élément secret PIN sans le divulguer. A titre d'exemple, le dispositif client génère la donnée de signature Z en signant le défi ou message r avec une clé de génération de preuve masquée P*$\beta$ selon la formule Z= signature(r, P*$\beta$). Pour générer cette donnée de signature, le dispositif client doit avoir accès à la valeur de l'élément secret pour générer la clé de génération de preuve masquée. Le client détenteur du dispositif client peut à ce moment saisir l'élément secret PIN sur le dispositif client. Le dispositif client peut, suite à une première saisie par le client, stocker temporairement en mémoire la valeur de l'élément secret ou son chiffré, par exemple pour la durée d'une session en cours. A titre d'exemple l'algorithme de signature utilisé pour générer la donnée de signature Z est du type DSA, ECDSA ou Schnorr.

La première étape de transmission A2 peut ensuite comprendre une étape de transmission de donnée de signature E9 au cours de laquelle le dispositif client transmet au serveur la donnée de signature Z.

La seconde étape de transmission A3 peut comprendre une septième étape de transmission de jeton E10 au cours de laquelle le dispositif client transmet au serveur son jeton de chiffrement C masqué à l'aide de la première donnée de masque $\beta$. Le dispositif client transmet par exemple la donnée C^$\beta$. Grace à la propriété d'homomorphisme de la fonction de chiffrement, ce jeton de chiffrement masqué correspond au résultat du chiffrement par la fonction de chiffrement Enc du hash P de l'élément secret PIN masqué à l'aide de la première donnée de masque $\beta$. A titre d'exemple :
C^$\beta$ = (Enc(g^P, pkEnc))^$\beta$ = Enc((g^P)^$\beta$, pkEnc) = Enc(g^(P*$\beta$), pkEnc).

La seconde étape de transmission A3 peut également comprendre une huitième étape de transmission de jeton E11 au cours de laquelle le dispositif client transmet au serveur son jeton de signature S masqué à l'aide de la première donnée de masque $\beta$. Le dispositif client transmet par exemple la donnée S^$\beta$. Grace à la propriété d'homomorphisme de la fonction de signature, ce jeton de signature masqué correspond au résultat de la signature par la fonction de signature Sign du jeton de chiffrement C masqué à l'aide de la première donnée de masque $\beta$. A titre d'exemple : S^$\beta$ = (Sign(C, skSign))^$\beta$ = Sign (C^$\beta$, skSign). Alternativement, si le jeton de chiffrement C transmis est dépendant d'une clé secrète du serveur d'enrôlement, par exemple C=Enc(g^(P*k)), le dispositif client transmet lors de la huitième étape de transmission de jeton E11 la valeur g^(P*$\beta$).

La première étape de vérification A4 peut comprendre une troisième étape de vérification E12 au cours de laquelle le serveur vérifie la validité de la signature du jeton de signature masqué S^$\beta$ reçu à partir du jeton de chiffrement masqué reçu C^$\beta$. Le serveur peut ainsi vérifier que le dispositif client dispose d'un jeton de chiffrement et du jeton de signature correspondant généré à l'aide de la clé privée pkSign de la fonction de signature Sign, connue uniquement du serveur. Grace au masquage par la première donnée de masque $\beta$, cette vérification est effectuée sans divulguer le jeton de chiffrement C et le jeton de signature S du dispositif client, évitant ainsi que ces données puissent être interceptées et réutilisées par un attaquant. Alternativement, si le jeton de chiffrement C transmis est dépendant d'une clé secrète du serveur d'enrôlement, le serveur réalise lors de la troisième étape de vérification E12 une vérification de cohérence en calculant la valeur $(g^{(P*\beta)})^k = g^{(P*\beta*k)}$ et en vérifiant qu'elle est égale au résultat du déchiffrement du jeton de chiffrement masqué reçu $C^{\beta}$.

La seconde étape de vérification A6 peut comprendre une quatrième étape de vérification E14 au cours de laquelle le serveur vérifie la validité de la signature de la donnée de signature reçue (Z= signature(r, (P*β)) à l'aide d'une clé de vérification de preuve. Selon une première variante, la clé de vérification de preuve peut être le jeton d'authentification masqué lui-même. Selon une deuxième variante, la clé de vérification de preuve est associée à la clé de génération de preuve masquée. La clé de vérification de preuve peut par exemple être la clé publique correspondant à la clé de génération de preuve privée P*β dans un schéma de signature clé publique/clé privée. La clé de vérification de preuve peut par exemple valoir $g^{(P*\beta)}$. Alternativement, la clé de vérification de preuve peut être égale à $g^{(P*\beta*k)}$ si le jeton transmis est dépendant d'une clé secrète du serveur d'enrôlement.

L'étape d'obtention A5 peut alors comprendre une étape de déchiffrement E13 au cours de laquelle le serveur déchiffre le jeton de chiffrement masqué $C^{\beta}= Enc(g^{(P*\beta)})$, alternativement $C^{\beta}= Enc(g^{(P*\beta*k)})$ à l'aide de la fonction de chiffrement pseudo-homomorphique Enc de sorte à obtenir la clé de vérification de preuve $g^{(P*\beta)}$, alternativement $g^{(P*\beta*k)}$.

Le serveur peut ainsi s'assurer que le client a connaissance de l'élément secret utilisé pour générer le jeton de chiffrement qui lui a été fourni sous forme masquée. Cette vérification peut avoir lieu sans que l'élément secret ni la clé masquée ne soient divulgués ni connus du serveur.

Dans le cas où les clés de chiffrement et de signature utilisées pour générer les jetons de chiffrement C et de signature S dépendent de l'identité de l'utilisateur, le serveur doit utiliser les clés correspondant à l'identité du client pour mettre en oeuvre la vérification de signature lors de la troisième étape de vérification E12 et le déchiffrement lors de l'étape de déchiffrement E13. Ceci permet par exemple au serveur de vérifier que le jeton de chiffrement qui lui a été fourni correspond bien au client qui lui a fourni, c'est-à-dire que ce jeton de chiffrement a bien été généré avec la clé correspondant à ce client, sinon le déchiffrement de ce jeton se solde par un échec. De même, dans le cas où le générateur g est spécifique à un dispositif client donné, le serveur doit utiliser le générateur correspondant à l'identité du client pour mettre en oeuvre la vérification de signature lors de la quatrième étape de vérification E14. L'identité du client peut lui avoir été transmise par le dispositif client, soit de manière automatique, soit suite à une saisie d'un identifiant par le client détenteur du dispositif client. Alternativement, le serveur ne connait pas l'identité du client et tente de mettre en oeuvre la troisième étape de vérification E12 et l'étape de déchiffrement E13 avec ses différentes clés jusqu'à ce que ces opérations soient un succès ou qu'il ait épuisé toutes les clés à sa disposition.

**2ème mode de mise en oeuvre dans lequel le jeton d'authentification est généré à l'aide de MAC homomorphes sur des courbes elliptiques :**

Selon une deuxième mise en oeuvre de génération de jeton d'authentification, le jeton d'authentification J peut être généré d'un seul bloc à l'aide d'un algorithme MAC symétrique pseudo-homomorphique.

*Phase d'initialisation*

Le serveur peut déterminer un générateur de nombre pseudo-aléatoire PRG d'un ensemble $K_G$ dans l'ensemble $Zp^2$, et une fonction pseudo-aléatoire PRF de $K_F$ x <G> dans l'ensemble Zp, G étant un groupe d'ordre premier p de générateur g. Le serveur d'enrôlement peut également tirer un élément K = (K1, K2) appartenant à $K_G$ x $K_F$, des ensembles d'aléas binaires. Un paramètre de sécurité λ, entier non nul, peut également être défini, tel que $|p| = 2^{\lambda}$. Par exemple λ=128, 256, 512 ou plus.

*Phase d'enrôlement*

Le procédé peut ensuite se poursuivre par une phase d'enrôlement du dispositif client auprès du serveur d'enrôlement au cours de laquelle le dispositif client obtient le jeton d'authentification J.

Cette phase peut comprendre une étape de détermination d'un élément secret PIN par le dispositif client E4 et une étape de génération d'un jeton d'authentification J.

L'étape de détermination de l'élément secret E4 comprend la sélection de l'élément secret par un client détenteur du dispositif client.

L'étape de génération d'un jeton d'authentification J peut comprendre une étape de calcul de hash P identique à la première étape de calcul d'un hash E51 décrite ci-dessus.

L'étape de génération d'un jeton d'authentification J peut ensuite comprendre des étapes de :

- calcul des valeurs $X1=g^{(P*\alpha)}$ et $X2=g^{\alpha}$, α étant une deuxième donnée de masque connue uniquement du dispositif client,

- transmission des valeurs X1 et X2 calculées au serveur d'enrôlement,
- tirage par le serveur d'un élément R dans le groupe G, éventuellement dépendant de l'identité du dispositif client,
- calcul par le serveur de u = $(u_1, u_2)$ = PRG(K1), b = PRF(K2, R),
- calcul par le serveur d'un jeton d'authentification masqué T' = X1^$u_1$ * X2^($u_2$+b),
- transmission par le serveur du jeton d'authentification masqué T' et de l'élément R au dispositif client,
- détermination par le dispositif client du jeton d'authentification J à partir du jeton d'authentification masqué T' en l'élevant à la puissance 1/$\alpha$,
- stockage par le dispositif client du jeton d'authentification J.

*Phase d'authentification*

Le procédé selon l'invention peut ensuite se poursuivre par une phase d'authentification du dispositif client auprès du serveur d'authentification.

L'étape de génération d'une preuve de connaissance de l'élément secret A1 comprend la génération par le dispositif client d'une donnée de signature Z obtenue en signant un défi r $\in$ {0,1}^$\lambda$ transmis par le serveur à l'aide d'une clé de génération de preuve masquée avec une première donnée de masque $\beta$. Une telle clé de génération de preuve masquée est par exemple égale à P*$\beta$. Pour générer cette donnée de signature, le dispositif client doit avoir accès à la valeur de l'élément secret pour générer la clé de génération de preuve masquée. Le client détenteur du dispositif client peut à ce moment saisir l'élément secret PIN sur le dispositif client. Le dispositif client peut, suite à une première saisie par le client, stocker temporairement en mémoire la valeur de l'élément secret ou son chiffré, par exemple pour la durée d'une session en cours. La signature utilisée peut être une signature obtenue en mettant en oeuvre l'algorithme de Schnorr.

La preuve de connaissance générée c'est-à-dire la donnée de signature Z est ensuite transmise lors de l'étape de transmission de preuve A2 du dispositif client au serveur.

La seconde étape de transmission A3 peut comprendre une étape de transmission au cours de laquelle le dispositif client calcule la valeur Y2=g^$\beta$ et transmet au serveur la valeur Y2 calculée ainsi que le jeton d'authentification masqué J'= J^$\beta$ et une valeur de contrôle CT masquée, sous la forme CT^$\beta$ = Enc(g^(P*$\beta$)) ou CT^$\beta$ = g^(P*$\beta$). La valeur g^P ou le chiffré correspondant Enc(g^(P)), nécessaire au calcul de la valeur de contrôle masquée, peut être stocké par le dispositif client depuis la phase d'enrôlement, ou bien être déterminé à la volée à partir de la valeur de l'élément secret saisie par le client au début de la phase d'authentification.

La première étape de vérification A4 peut comprendre une étape de vérification au cours de laquelle le serveur vérifie la validité du jeton d'authentification masqué J' reçu. Pour cela, le serveur peut obtenir g^(P*$\beta$) à partir de la valeur de contrôle masquée, si nécessaire en la déchiffrant, calculer u = $(u_1, u_2)$ = PRG(K1), calculer B = Y2^(PRF(K2, R)), calculer D = (g^(P*$\beta$))^$u_1$ * Y2^$u_2$, et vérifier si B*D est bien égal à J^$\beta$.

L'étape d'obtention d'une clé de vérification A5 peut comprendre l'obtention d'une clé de vérification associée à la clé de génération de preuve. La clé de vérification peut par exemple être la clé publique correspondant à la clé privée P*$\beta$ dans un schéma de signature clé publique/clé privée. Par exemple dans le cas de l'utilisation de l'algorithme de Schnorr pour la signature, la clé de vérification de preuve peut valoir g^(P*$\beta$).

Enfin la seconde étape de vérification A6 peut comprendre une étape de vérification au cours de laquelle le serveur vérifie la validité de la signature de la donnée de signature reçue (Z= signature(r, (P*$\beta$)) à l'aide de la clé de vérification de preuve obtenue

***3$^{ème}$ mode de mise en oeuvre dans lequel le jeton d'authentification est généré à l'aide d'un algorithme de type Diffie Hellman sur des courbes elliptiques (Première variante) :***

*Phase d'initialisation*

Dans cette phase, le serveur d'enrôlement définit un paramètre de sécurité $\lambda$, entier non nul. Il détermine également une courbe elliptique (p, G, g), avec p un nombre premier, ordre du groupe G des points de la courbe, tel que |p| = 2^$\lambda$, et g étant un générateur du groupe G.

*Phase d'enrôlement*

Cette phase peut comprendre une étape de détermination d'un élément secret par le dispositif client E4 et une étape de génération d'un jeton d'authentification J.

L'étape de détermination de l'élément secret E4 comprend la sélection de l'élément secret par un client détenteur du dispositif client.

L'étape de génération d'un jeton d'authentification J peut comprendre une étape de calcul de hash P identique à la première étape de calcul d'un hash E51 décrite ci-dessus.

L'étape de génération d'un jeton d'authentification J peut ensuite comprendre des étapes de :

- calcul par le dispositif client d'une valeur $Y=g^{\wedge}(P*\alpha)$, $\alpha$ étant une donnée de masque connue uniquement du dispositif client;
- transmission de ladite valeur Y au serveur;
- dérivation d'une clé utilisateur $k \in Zp^*$ par le serveur;
- calcul par le serveur d'un jeton d'authentification masqué $T' = Y^{\wedge}k$ ;
- transmission du jeton d'authentification masqué T' au dispositif client ;
- détermination par le dispositif client du jeton d'authentification J à partir du jeton d'authentification masqué T' reçu en l'élevant à la puissance $\alpha^{\wedge}(-1)$ mod p.
- stockage par le dispositif client d'un jeton d'authentification J.

*Phase d'authentification*

L'étape de génération d'une preuve de connaissance de l'élément secret A1 comprend la génération par le dispositif client d'une donnée de signature Z obtenue en signant un défi $r \in \{0,1\}^{\wedge}\lambda$ transmis par le serveur à l'aide d'une clé de génération de preuve masquée avec une première donnée de masque $\beta$. Une telle clé de génération de preuve masquée est par exemple égale à $P*\beta$. Pour générer cette donnée de signature, le dispositif client doit avoir accès à la valeur de l'élément secret pour générer la clé de génération de preuve masquée. Le client détenteur du dispositif client peut à ce moment saisir l'élément secret PIN sur le dispositif client. Le dispositif client peut, suite à une première saisie par le client, stocker temporairement en mémoire la valeur de l'élément secret ou son chiffré, par exemple pour la durée d'une session en cours. La signature utilisée peut être une signature obtenue en mettant en oeuvre l'algorithme de Schnorr ou ECDSA, les clés secrètes devant être dans $Zp^*$.

La preuve de connaissance générée c'est-à-dire la donnée de signature Z est ensuite transmise lors de l'étape de transmission de preuve A2 du dispositif client au serveur.

La seconde étape de transmission A3 peut comprendre une étape de transmission au cours de laquelle le dispositif client calcule et transmet au serveur le jeton d'authentification masqué $J'= J^{\wedge}\beta$ et une valeur de contrôle CT masquée, sous la forme $CT^{\wedge}\beta = Enc(g^{\wedge}(P*\beta))$ ou $CT^{\wedge}\beta = g^{\wedge}(P*\beta)$. La valeur $g^{\wedge}P$ ou le chiffré correspondant $Enc(g^{\wedge}(P))$, nécessaire au calcul de la valeur de contrôle masquée, peut être stocké par le dispositif client depuis la phase d'enrôlement, ou bien être déterminé à la volée à partir de la valeur de l'élément secret saisie par le client au début de la phase d'authentification.

La première étape de vérification A4 peut comprendre une étape de vérification au cours de laquelle le serveur vérifie la validité du jeton d'authentification masqué J' reçu. Pour cela, le serveur peut obtenir $g^{\wedge}(P*\beta)$ à partir de la valeur de contrôle masquée, si nécessaire en la déchiffrant, obtenir la clé d'utilisateur dérivée k et vérifier si $(g^{\wedge}(P*\beta))^{\wedge}k$ est égal à $J^{\wedge}\beta$.

L'étape d'obtention d'une clé de vérification A5 peut comprendre l'obtention d'une clé de vérification associée à la clé de génération de preuve. La clé de vérification peut par exemple être la clé publique correspondant à la clé privée $P*\beta$ dans un schéma de signature clé publique/clé privée. Par exemple, la clé de vérification de preuve peut être calculée à partir de $g^{\wedge}(k*P*\beta)$, c'est à dire à partir du jeton d'authentification masqué lui-même.

La seconde étape de vérification A6 peut comprendre une étape de vérification au cours de laquelle le serveur vérifie la validité de la signature de la donnée de signature reçue $(Z= signature(r, (P*\beta)))$ à l'aide de la clé de vérification de preuve obtenue.

**$3^{ème}$ mode de mise dans lequel le jeton d'authentification est généré à l'aide d'un algorithme de type Diffie Hellman sur des courbes elliptiques (Deuxième variante) :**

*Phase d'initialisation*

Dans cette phase, le serveur d'enrôlement définit un paramètre de sécurité $\lambda$, entier non nul. Il détermine également une courbe elliptique (p, G, g) avec p un nombre premier, ordre du groupe G des points de la courbe, tel que $|p| = 2^{\wedge}\lambda$, et g étant un générateur du groupe G.

*Phase d'enrôlement*

Cette phase peut comprendre une étape de détermination d'un élément secret par le dispositif client E4 et une étape de génération d'un jeton d'authentification J.

L'étape de détermination de l'élément secret E4 comprend la sélection de l'élément secret par un client détenteur du dispositif client.

L'étape de génération d'un jeton d'authentification J peut comprendre une étape de calcul de hash P identique à la première étape de calcul d'un hash E51 décrite ci-dessus.

L'étape de génération d'un jeton d'authentification J peut ensuite comprendre des étapes de :

- calcul par le dispositif client d'une valeur Y égale à $g^{\wedge}(P*\alpha)$, $\alpha$ étant une donnée de masque connue uniquement du dispositif client;
- transmission de ladite valeur Y au serveur d'enrôlement ;
- dérivation d'une clé utilisateur $k \in Zp*$ par le serveur et stockage de cette clé par le serveur sous la forme $K=g^{\wedge}k$;
- calcul par le serveur d'un jeton serveur masqué T' = Y^k ;
- transmission du jeton serveur masqué T' au dispositif client ;
- détermination par le dispositif client du jeton d'authentification J à partir du jeton serveur masqué T' reçu en l'élevant à la puissance $\alpha^{\wedge}(-1)$ mod p.
- stockage par le dispositif client d'un jeton d'authentification J.

*Phase d'authentification*

L'étape de génération d'une preuve de connaissance de l'élément secret A1 comprend la génération par le dispositif client d'une donnée de signature Z obtenue en signant un défi $r \in \{0,1\}^{\wedge} \lambda$ transmis par le serveur avec une clé de génération de preuve masquée avec une première donnée de masque $\beta$. Une telle clé de génération de preuve masquée est par exemple égale à $P*\beta$. Pour générer cette donnée de signature, le dispositif client doit avoir accès à la valeur de l'élément secret pour générer la clé de génération de preuve masquée. Le client détenteur du dispositif client peut à ce moment saisir l'élément secret PIN sur le dispositif client. La signature utilisée peut être une signature obtenue en mettant en oeuvre l'algorithme de Schnorr ou ECDSA, les clés secrètes devant être dans $Zp*$.

La preuve de connaissance générée c'est-à-dire la donnée de signature Z est ensuite transmise lors de l'étape de transmission de preuve A2 du dispositif client au serveur.

Le serveur peut par ailleurs récupérer la valeur $K=g^{\wedge}k$ stockée lors de la phase d'enrôlement, tirer b dans $Zp*$, calculer K' = K^b et transmettre K' au dispositif client.

La seconde étape de transmission A3 peut comprendre une étape de transmission au cours de laquelle le dispositif client calcule et transmet au serveur une valeur K" = K' ^ (P*$\beta$) et le jeton d'authentification masqué J'= J^$\beta$.

La première étape de vérification A4 peut comprendre une étape de vérification au cours de laquelle le serveur vérifie la validité du jeton d'authentification masqué J' reçu. Pour cela, le serveur peut vérifier si $(J^{\wedge}\beta)^{\wedge}b = g^{\wedge}(P*k*\beta*b)$ est égal à K".

L'étape d'obtention d'une clé de vérification A5 peut comprendre l'obtention d'une clé de vérification associée à la clé de génération de preuve. La clé de vérification peut par exemple être la clé publique correspondant à la clé privée $P*\beta$ dans un schéma de signature clé publique/clé privée. Par exemple, la clé de vérification de preuve peut être calculée à partir de $g^{\wedge}(P*\beta*k)$, c'est à dire à partir du jeton d'authentification masqué lui-même.

La seconde étape de vérification A6 peut comprendre une étape de vérification au cours de laquelle le serveur vérifie la validité de la signature de la donnée de signature reçue (Z= signature(r, (P*$\beta$)) à l'aide de la clé de vérification de preuve obtenue.

**4$^{ième}$ mode de mise en oeuvre dans lequel le jeton d'authentification est généré à base de signature RSA :**

*Phase d'initialisation*

Le serveur d'enrôlement définit un paramètre de sécurité $\lambda$, entier non nul définissant la taille des objets cryptographiques à utiliser.

Il sélectionne ensuite (N, e, d) selon $\lambda$, avec N produit de deux entiers premiers sûrs et d l'inverse de e modulo N, puis une chaîne de bits r contenant des informations propres à l'utilisateur et calcule R égal à HQ(r) avec HQ une application de {0, 1}* dans un groupe G de générateur g. A titre d'exemple, si $\lambda$=100, N est choisi de taille 2048 bits.

Le serveur transmet ensuite N, e et R au dispositif client.

*Phase d'enrôlement*

Cette phase comprend une étape de détermination d'un élément secret par le dispositif client E4 et une étape de génération d'un jeton d'authentification J.

L'étape de détermination de l'élément secret E4 peut comprendre la sélection de l'élément secret par un client détenteur du dispositif client.

L'étape de génération d'un jeton d'authentification J peut comprendre une étape de calcul de hash P identique à la première étape de calcul d'un hash E51 décrite ci-dessus.

L'étape de génération d'un jeton d'authentification J peut ensuite comprendre des étapes de :

- calcul et transmission par le dispositif client au serveur d'enrôlement d'une valeur H' égale à $g^{\wedge}(P*\alpha)$, $\alpha$ étant une donnée de masque connue uniquement du dispositif client et d'une valeur R' égal à R masqué avec la donnée de masque $\alpha$ : R' = $R^{\wedge}\alpha$ ;
- calcul et transmission par le serveur au dispositif client d'un jeton serveur masqué S'égal à $(R'.H')^{\wedge}d$ mod N.
- détermination par le dispositif client d'un jeton serveur S à partir du jeton serveur masqué S' reçu en l'élevant à la puissance $1/\alpha$.
- stockage par le dispositif client d'un jeton d'authentification J=(R, S), ainsi que des valeurs N et e.

*Phase d'authentification*

L'étape de génération d'une preuve de connaissance de l'élément secret A1 comprend la génération par le dispositif client d'une donnée de signature Z obtenue en signant un défi $r \in \{0,1\}^{\wedge} \lambda$ transmis par le serveur avec une clé de génération de preuve masquée avec une première donnée de masque $\beta$. Une telle clé de génération de preuve masquée est par exemple égale à P*$\beta$. Pour générer cette donnée de signature, le dispositif client doit avoir accès à la valeur de l'élément secret pour générer la clé de génération de preuve masquée. Le client détenteur du dispositif client peut à ce moment saisir l'élément secret PIN sur le dispositif client. La signature utilisée peut être une signature obtenue en mettant en oeuvre n'importe quel algorithme de signature compatible avec G.

La preuve de connaissance générée c'est-à-dire la donnée de signature Z est ensuite transmise lors de l'étape de transmission de preuve A2 du dispositif client au serveur.

La seconde étape de transmission A3 peut comprendre une étape de transmission au cours de laquelle le dispositif client transmet au serveur le jeton d'authentification masqué J' = $J^{\wedge}\beta$ = (($R^{\wedge}\beta$, $S^{\wedge}\beta$) et une valeur H^ $\beta$ = (H' $^{\wedge}(\alpha^{\wedge}(-1)))^{\wedge} \beta$.

La première étape de vérification A4 peut comprendre une étape de vérification au cours de laquelle le serveur vérifie la validité du jeton d'authentification masqué J' reçu. Pour cela, le serveur peut vérifier si $(S^{\wedge}\beta)^{\wedge}e = (R^{\wedge}(\beta*d*e))*$ $g^{\wedge}(P*p*d*e)$ est égal à $R^{\wedge}\beta.H^{\wedge}\beta$ mod N.

L'étape d'obtention d'une clé de vérification A5 peut comprendre l'obtention d'une clé de vérification associée à la clé de génération de preuve. La clé de vérification peut par exemple être la clé publique correspondant à la clé privée P*$\beta$ dans un schéma de signature clé publique/clé privée. Par exemple, la clé de vérification de preuve peut être calculée à partir de $H^{\wedge}\beta = g^{\wedge}(P*\beta)$.

La seconde étape de vérification A6 peut comprendre une étape de vérification au cours de laquelle le serveur vérifie la validité de la signature de la donnée de signature reçue (Z= signature(r, (P*$\beta$)) à l'aide de la clé de vérification de preuve obtenue à partir du jeton d'authentification masqué reçu.

**$5^{\text{ième}}$ mode de mise en oeuvre dans lequel le jeton d'authentification est généré à base de double chiffrement pseudo-homomorphique sur courbes elliptiques**

*Phase d'initialisation*

Le serveur d'enrôlement définit un paramètre de sécurité $\lambda$, entier non nul. Il détermine également une courbe elliptique (p, <G>, G) avec p un nombre premier tel que $|p| = 2^{\wedge}\lambda$. p est l'ordre du groupe <G> des points de la courbe de générateur G. Le serveur détermine également un quadruplet de clés (u, v, U, V) appartenant à Zp x Zp x <G> x <G> tel que U = [u]*G et V = [v]*G, avec [u] et [v] des entiers modulo p dans Zp. U correspond à une première clé publique associée à une première clé privée secrète [u] d'une première fonction de chiffrement pseudo-homomorphique asymétrique Enc1 du type l'algorithme de El Gamal. V correspond à une deuxième clé publique associée à une deuxième clé privée secrète [v] d'une deuxième fonction de chiffrement pseudo-homomorphique asymétrique Enc2 du type algorithme de El Gamal. Les clés secrètes [u] et [v] peuvent être différentes ou identiques. Les première et deuxième fonctions peuvent être différentes ou identiques. Ces clés de chiffrements vont être utilisées pour générer les différents jetons dont le dispositif client va avoir besoin pour s'authentifier lors d'une phase d'authentification ultérieure.

*Phase d'enrôlement*

Cette phase peut comprendre une étape de détermination d'un élément secret par le dispositif client E4 et une étape de génération d'un jeton d'authentification J.

L'étape de détermination de l'élément secret E4 comprend la sélection de l'élément secret par un client détenteur du dispositif client.

L'étape de génération d'un jeton d'authentification J peut comprendre une étape de calcul de hash P identique à la première étape de calcul d'un hash E51 décrite ci-dessus.

L'étape de génération d'un jeton d'authentification J peut ensuite comprendre des étapes de :

- calcul par le dispositif client d'une valeur Y égale à $[P*\alpha]*G$, $\alpha$ étant une donnée de masque connue uniquement du dispositif client;
- transmission de ladite valeur Y au serveur d'enrôlement ;
- dérivation d'une clé secrète utilisateur $k \in Zp*$ par le serveur ;
- calcul par le serveur d'un premier jeton chiffré (U1, U2), résultat d'un chiffrement par la première fonction de chiffrement asymétrique pseudo-homomorphique Enc1 de la clé secrète d'utilisateur k avec la première clé publique U associée à la première clé privée secrète u. Par exemple, $U1 = [r_1]*U$, $U2 = [k]*G + [r_1]*G$, avec $r_1$ déterminé par le serveur et appartenant à Zp ;
- calcul d'un jeton serveur masqué (V1", V2") résultat d'un chiffrement par la deuxième fonction de chiffrement pseudo-homomorphique asymétrique Enc2, avec la deuxième clé publique V associée à la deuxième clé privée secrète v, de la clé secrète d'utilisateur k et de la clé de génération de preuve P masquée par la donnée de masque $\alpha$. Le jeton serveur masqué peut ainsi correspondre au résultat du chiffrement par Enc2 du produit [kPa] *G avec la deuxième clé publique V. Par exemple, $V1" = [r_2']*V$ et $V2" = [k]*Y + [r_2']*G$ avec $r_2'$ déterminé par le serveur et appartenant à Zp ;
- transmission du premier jeton chiffré (U1, U2) et du jeton serveur masqué (V1", V2") au dispositif client ;
- optionnellement, stockage par le serveur de H1(K), H1 étant une fonction de hachage choisie par le serveur et K étant égal à [k]*G;
- détermination par le client du jeton d'authentification (V1, V2) à partir du jeton serveur masqué (V1", V2") reçu en le multipliant par un facteur $\alpha^\wedge(-1) \bmod p$,
- stockage par le dispositif client du premier jeton chiffré (U1, U2) ainsi que du jeton d'authentification J.

A l'issue de cette phase d'enrôlement, le dispositif client peut donc disposer d'un premier jeton chiffré et d'un jeton d'authentification, correspondant respectivement à des chiffrés de k et de kP. Ces jetons chiffrés avec les clés publiques U et V ne pourront être déchiffrés que par le serveur, unique détenteur des clés privées associées u et v. Lors d'une phase d'authentification ultérieure, le dispositif client pourra ainsi utiliser ces jetons pour prouver au serveur sa connaissance de l'élément secret PIN sans le divulguer et pour prouver que les deux jetons ont bien été générés à partir de la même clé d'utilisateur k.

*Phase d'authentification*

L'étape de génération d'une preuve de connaissance de l'élément secret A1 comprend la transmission d'un défi $r \in \{0,1\}^\wedge \lambda$ par le serveur au dispositif client et la génération par le dispositif client d'une donnée de signature Z obtenue, par exemple selon un algorithme de signature de Schnorr, à partir d'un premier paramètre t, d'une première valeur de hash c et d'une clé de génération de preuve masquée avec une première donnée de masque $\beta$. Une telle clé de génération de preuve masquée est par exemple égale à $P*\beta$. Pour générer cette donnée de signature, le dispositif client doit avoir accès à la valeur de l'élément secret pour générer la clé de génération de preuve masquée. Le client détenteur du dispositif client peut à ce moment saisir l'élément secret PIN sur le dispositif client. Ladite première valeur de hash c est obtenue à partir du défi reçu r, du premier jeton chiffré (U1, U2), du jeton d'authentification masqué J' à l'aide de la première donnée de masque $\beta$ et d'un deuxième jeton chiffré (R1, R2).

La donnée de signature Z peut par exemple être déterminée à une étape F8 par le dispositif client en mettant en oeuvre les étapes suivantes :

- optionnellement, détermination F80 d'un premier jeton chiffré aléatoire (U1', U2') en appliquant un aléa au premier jeton chiffré (U1, U2). Par exemple $U1' = U1 + [rr]*U$ et $U2' = U2 + [rr]*G$, avec [rr] un scalaire choisi aléatoirement appartenant à Zp* ; L'application d'un tel aléa au résultat d'un chiffrement probabiliste permet de ne pas pouvoir tracer une donnée initiale ayant fait l'objet du chiffrement et de l'application de l'aléa puisque les résultats du chiffrement et de l'application de l'aléa seront différents pour la même donnée initiale. Si cette étape n'est pas réalisée, le premier jeton chiffré (U1, U2) est égal au premier jeton chiffré aléatoire (U1', U2') dans la suite de la description.
- calcul F81 du deuxième jeton chiffré (R1, R2) correspondant au chiffrement par la première fonction de chiffrement asymétrique pseudo-homomorphique Enc1 de la clé secrète d'utilisateur k et d'un premier paramètre t tiré dans Zp* par le dispositif client avec la première clé publique U associée à la première clé privée secrète u. Le deuxième jeton chiffré peut correspondre au chiffrement de [t k]*G. Le deuxième jeton chiffré est calculé à partir du premier jeton chiffré aléatoire (U1', U2') et du premier paramètre t. Par exemple : R1 = [t]*U1' et R2 = [t]*U2',

- calcul F82 du jeton d'authentification masqué obtenu en masquant le jeton d'authentification (V1, V2) à l'aide de la première donnée de masque β : J' = (V1', V2') avec V1' = [β]*V1 et V2' = [β]*V2
- calcul F83 d'une première valeur de hash c à partir du défi r, du premier jeton chiffré aléatoire (U1', U2'), du jeton d'authentification masqué J' et du deuxième jeton chiffré (R1, R2). Par exemple une telle première valeur de hash c peut être égale à H2(U1'‖U2'‖V1'‖V2'‖R1‖R2‖r), H2 étant une fonction de hachage de {0,1}* dans {0,11^λ, le signe « ‖ » représentant l'opération de concaténation,
- calcul F84 de la donnée de signature Z à partir du premier paramètre t, de la première valeur de hash c et de la clé de génération de preuve masquée à l'aide de la première donnée de masque β : P*β. Par exemple Z peut être égale à t + c*P*β mod p.

La preuve de connaissance générée c'est-à-dire la donnée de signature Z est ensuite transmise F9 lors de l'étape de transmission de preuve A2 du dispositif client au serveur.

La seconde étape de transmission A3 peut comprendre une étape de transmission F10 au cours de laquelle le dispositif client transmet au serveur le jeton d'authentification masqué à l'aide de la première donnée de masque β : J'= (V1', V2'), Le dispositif client transmet également lors d'une étape F11 au serveur le premier jeton chiffré aléatoire (U1', U2'), ainsi que le deuxième jeton chiffré (R1, R2).

Le serveur met ensuite en oeuvre simultanément une vérification A4 de la validité du jeton d'authentification masqué J' reçu et une vérification A6 de la validité de la preuve de connaissance Z à partir du jeton d'authentification masqué reçu. Pour cela, le serveur peut mettre en oeuvre les étapes suivantes :

- calcul F12 d'une deuxième valeur de hash c' à partir du défi r, du premier jeton chiffré aléatoire (U1', U2'), du jeton d'authentification masqué à l'aide de la première donnée de masque β : J' et du deuxième jeton chiffré (R1, R2) reçus. Par exemple une telle première valeur de hash c peut être égale à H2(U1'‖U2'‖V1'‖V2'‖R1‖R2‖r)
- calcul F13 d'un premier jeton déchiffré K' en déchiffrant le premier jeton chiffré aléatoire (U1', U2') avec la première clé privée secrète u de la première fonction de chiffrement asymétrique pseudo-homomorphique. Par exemple un tel premier jeton déchiffré K' peut être égal à U2' - [u*] * U1', avec u* = u⁻¹ mod p ; Le premier jeton déchiffré K' peut alors être fonction de [k]*G,
- calcul F14 d'une clé de vérification de preuve T' en déchiffrant le jeton d'authentification masqué (V1', V2') avec la deuxième clé privée secrète v de la deuxième fonction de chiffrement asymétrique pseudo-homomorphique Enc2 ; Par exemple, le deuxième jeton déchiffré T' peut être égal à V2' - [v*] * V1', avec v* = v⁻¹ mod p ; Le deuxième jeton déchiffré T' peut alors être fonction de [k β P]*G
- calcul F15 d'un deuxième jeton déchiffré R en déchiffrant le deuxième jeton chiffré (R1, R2) avec la première clé privée secrète u de la première fonction de chiffrement asymétrique pseudo-homomorphique Enc1; Par exemple, le troisième jeton déchiffré R peut être égal à R2 - [u*] * R1 ; Le troisième jeton déchiffré R peut alors être fonction de [t k]*G,
- vérification F16 par le serveur de la validité du jeton d'authentification masqué reçu et de la preuve de connaissance à partir de la donnée de signature reçue Z, du premier jeton déchiffré K', du deuxième jeton déchiffré R, de la deuxième valeur de hash c' et de la clé de vérification de preuve T' par exemple en vérifiant de l'égalité suivante : Z * K' = R + [c'] * T'. Cette vérification permet au serveur de déterminer la validité du jeton d'authentification masqué à l'aide de la première donnée de masque β reçu J' et la validité de la preuve de connaissance Z. Le dispositif client a ainsi prouvé au serveur sa connaissance de l'élément secret PIN sans le divulguer. De plus, en vérifiant cette égalité, le serveur s'assure que les jetons ont bien été générés à partir de la même clé d'utilisateur k.

Le serveur peut également procéder à une vérification supplémentaire en testant si H(K') est bien égal à H(K). Une telle vérification supplémentaire permet de vérifier que la clé secrète d'utilisateur k utilisée pour générer les jetons fournis par le dispositif client lors de son authentification est bien la même que celle mémorisée par le serveur pour ce client lors de son enrôlement.

Une fois l'authentification du dispositif client réussi, des clés de sessions telles que des clés de chiffrement et des clés d'intégrités MAC peuvent être générées et partagées entre le dispositif client et le serveur, puis utilisées comme clés valides pour sécuriser les échanges entre le dispositif client et le serveur, par exemple jusqu'à l'expiration d'une session en cours. A titre d'exemple ces clés peuvent être dérivées de la clé de vérification g^(P*β), utilisée comme secret partagé entre le dispositif client et le serveur.

Il est possible de prévoir un mécanisme de récupération du hash P de l'élément secret PIN pour retrouver ce hash en cas d'oubli du PIN par le client détenteur du dispositif client. L'élément secret n'étant pas connu du serveur, celui-ci ne peut en effet pas le renvoyer au client. Une solution consiste en ce que le dispositif client stocke une valeur γ dite complément d'élément secret, telle que la valeur γ+P soit facilement attaquable, par exemple par une attaque brute par dictionnaire, c'est-à-dire que le serveur puisse retrouver γ+P à partir de g^(γ+P). Lorsque le dispositif client souhaite retrouver le hash de son élément secret, il lui suffit alors de générer (g^P)*(g^γ) = g^(γ+P), et de le transmettre au serveur. Celui-ci retrouve alors la valeur de γ+P et la retransmet au dispositif client afin que celui-ci retrouve la valeur de P puisqu'il connait celle de γ.

Il est également possible de prévoir un mécanisme de modification de l'élément secret par le dispositif client. De nouveaux jetons de signature et de chiffrement peuvent alors être générés à partir d'un nouvel élément secret choisi par le client selon le troisième mode de génération décrit précédemment, à l'aide de jetons temporaires générés par le serveur.

Ainsi le client détenteur du dispositif client peut prouver au serveur sa connaissance de l'élément secret PIN, sans que cet élément secret ne soit stocké dans la mémoire du dispositif client ou du serveur, rendant le procédé insensible à une compromission de la mémoire du dispositif client ou du serveur. De plus, les données échangées entre le dispositif client et le serveur peuvent être masquées par des données de masquage, rendant difficile leur réutilisation par un attaquant et protégeant le procédé contre des attaques par rejeu. Enfin, aucun calcul complexe n'est nécessaire, limitant ainsi la puissance de calcul nécessaire et permettant de le mettre en oeuvre sur un client léger tel qu'un téléphone mobile.

## Revendications

1. Procédé d'authentification d'un dispositif client auprès d'un serveur à l'aide d'un élément secret (PIN) connu uniquement du dispositif client,
   ledit dispositif client détenant un jeton d'authentification (J) généré à l'aide d'une fonction pseudo-homomorphique et à partir dudit élément secret (PIN),
   ledit procédé comprenant des étapes de :

   - génération (A1), par le dispositif client, d'une preuve de connaissance de l'élément secret (PIN) à partir d'une clé de génération de preuve (P) masquée avec une première donnée de masque (β), ladite première donnée de masque étant une donnée aléatoire non publique connue uniquement du dispositif client et ladite clé de génération de preuve (P) masquée étant fonction dudit élément secret (PIN),
   - transmission (A2), au serveur, par le dispositif client de ladite preuve de connaissance de l'élément secret générée,
   - transmission (A3) au serveur par le dispositif client du jeton d'authentification (J) masqué à l'aide de la première donnée de masque (β),
   - vérification (A4) par le serveur de la validité du jeton d'authentification masqué reçu,
   - vérification (A6) par le serveur de la validité de la preuve de connaissance par une preuve à divulgation nulle de connaissance prouvant la connaissance dudit élément secret par le dispositif client sans le divulguer.

2. Procédé d'authentification selon la revendication précédente, comprenant une étape d'obtention (A5) par le serveur d'une clé de vérification de preuve associée à ladite clé de génération de preuve, et dans lequel l'étape de vérification (A6) de la validité de la preuve de connaissance comprend une vérification par le serveur de la validité de la preuve de connaissance à l'aide de la clé de vérification de preuve obtenue.

3. Procédé d'authentification selon l'une des revendications précédentes dans lequel le serveur vérifie la validité de la preuve de connaissance (A6) à partir du jeton d'authentification masqué reçu.

4. Procédé d'authentification selon l'une des revendications précédentes, dans lequel le jeton d'authentification (J) comprend un jeton de chiffrement (C) obtenu par chiffrement à partir dudit élément secret (PIN) à l'aide d'une fonction de chiffrement pseudo-homomorphique (Enc).

5. Procédé d'authentification selon la revendication précédente, dans lequel :

   - le jeton d'authentification (J) comprend en outre un jeton de signature (S) correspondant au résultat de la signature du jeton de chiffrement (C) à l'aide d'une fonction de signature pseudo-homomorphique (Sign),
   - l'étape de transmission du jeton d'authentification (J) masqué (A3) comprend la transmission (E10), par le dispositif client, au serveur, du jeton de chiffrement détenu masqué (C^ β) à l'aide de la première donnée de masque (β) et la transmission (E11), par le dispositif client, au serveur, du jeton de signature détenu masqué (Sign(C) ^ β) à l'aide de la première donnée de masque (β);
   - l'étape de vérification du jeton d'authentification masqué (A4) comprend la vérification (E12), par le serveur, de la validité de la signature du jeton de signature masqué reçu à partir du jeton de chiffrement masqué reçu.

**6.** Procédé d'authentification selon l'une des revendications précédentes dans lequel :

- l'étape de génération (A1) d'une preuve de connaissance de l'élément secret (PIN) comprend la transmission d'un défi (« challenge ») (r) (E7) par le serveur au dispositif client, et la génération (E8), par le dispositif client, d'une donnée de signature (Z) obtenue en signant le défi (r) reçu à l'aide de ladite clé de génération de preuve (P) masquée,
- l'étape de transmission (A2) au serveur par le dispositif client de ladite preuve de connaissance de l'élément secret comprend la transmission (E9), par le dispositif client, de ladite donnée de signature (Z) au serveur.

**7.** Procédé d'authentification selon l'une des revendications 4 à 6 dans lequel :

- l'étape de transmission (A3) du jeton d'authentification (J) masqué comprend la transmission (E10), par le dispositif client, au serveur, du jeton de chiffrement détenu masqué (C^ β) à l'aide de la première donnée de masque (β),
- l'étape d'obtention (A5) de la clé de vérification de preuve à partir du jeton d'authentification masqué reçu comprend le déchiffrement (E13), par le serveur, du jeton de chiffrement masqué reçu à l'aide de la fonction de chiffrement pseudo-homomorphique de sorte à obtenir une clé de vérification de preuve,
- l'étape de vérification (A6) de la validité de la preuve de connaissance comprend la vérification (E14), par le serveur, de la validité de la signature de la donnée de signature reçue (Z) à l'aide de la clé de vérification de preuve obtenue.

**8.** Procédé d'authentification selon l'une des revendications 5 ou 7 comprenant en outre lors d'une phase d'enrôlement préalable des étapes de :

- détermination (E4) de l'élément secret par le dispositif client et,
- génération des jetons de chiffrement (E5) et de signature (E6).

**9.** Procédé d'authentification selon la revendication 8 dans lequel, lors de la phase d'enrôlement, l'étape de détermination de l'élément secret (E4) comprend la sélection de l'élément secret par un client détenteur du dispositif client et l'étape de génération du jeton de chiffrement (E5) comprend la génération du jeton de chiffrement par le dispositif client;

**10.** Procédé d'authentification selon la revendication 8 dans lequel, lors de la phase d'enrôlement, l'étape de détermination de l'élément secret (E4) comprend la sélection de l'élément secret par un client détenteur du dispositif client et la transmission de l'élément secret sélectionné au serveur, et les étapes de génération des jetons de chiffrement (E5) et de signature (E6) comprennent la génération du jeton de chiffrement et du jeton de signature par le serveur et la transmission (E53, E66) de ces jetons au dispositif client.

**11.** Procédé d'authentification selon l'une des revendications 8 à 10, dans lequel l'étape de génération d'un jeton de chiffrement (E5) comprend le calcul (E51) d'un hash de l'élément secret à partir d'une fonction de hachage et le chiffrement (E52) dudit hash à l'aide de la fonction de chiffrement pseudo-homomorphique (Enc).

**12.** Procédé d'authentification selon la revendication 8 dans lequel, l'étape de génération du jeton de chiffrement (E5) comprend la génération par le serveur d'un élément secret temporaire (E54), la génération d'un jeton de chiffrement temporaire (E55) à partir de l'élément secret temporaire, la transmission de l'élément secret temporaire et du jeton de chiffrement temporaire au dispositif client (E56) et la génération par le dispositif client d'un jeton de chiffrement (E57) à partir du jeton de chiffrement temporaire, de l'élément secret temporaire et de l'élément secret (PIN), et dans lequel l'étape de génération du jeton de signature (E6) comprend la génération par le serveur d'un jeton de signature temporaire (E67) en signant le jeton de chiffrement temporaire, la transmission du jeton de signature temporaire (E68) au dispositif client et la génération par le dispositif client d'un jeton de signature (E69) à partir du jeton de signature temporaire, de l'élément secret temporaire et de l'élément secret (PIN).

**13.** Procédé d'authentification selon la revendication 12, dans lequel la génération du jeton de chiffrement temporaire (E55) comprend le calcul d'un hash de l'élément secret temporaire à partir d'une fonction de hachage et le chiffrement dudit hash à l'aide de la fonction de chiffrement pseudo-homomorphique (Enc).

**14.** Procédé d'authentification selon l'une des revendications 11 ou 13, dans lequel l'étape de calcul d'un hash d'un élément secret comprend le calcul d'un hash dudit élément secret et d'au moins un élément secret supplémentaire à partir d'une fonction de hachage.

15. Procédé d'authentification selon la revendication 11 ou 13, dans lequel la génération d'un jeton de chiffrement à partir d'un élément secret σ est réalisée à l'aide de la formule suivante : C = Enc(g^P) avec g un générateur d'un groupe d'ordre élevé et P=h(s, σ) avec s un nombre aléatoire (sel), h une fonction de hachage et σ pouvant être égal à l'élément secret (PIN) ou à un élément secret temporaire.

16. Procédé d'authentification selon l'une des revendications 8, 9, 11, 14, 15 dans lequel, lors de la phase d'enrôlement :

    - l'étape de génération du jeton de chiffrement (E5) est réalisée par le dispositif client,
    - et l'étape de génération du jeton de signature (E6) comprend :

        - le masquage (E61) dudit jeton de chiffrement à l'aide d'une deuxième donnée de masque α aléatoire et connue uniquement du dispositif client,
        - la transmission (E62) au serveur dudit jeton de chiffrement masqué,
        - la génération (E63) par le serveur d'une deuxième donnée de signature (Sm) en signant le jeton de chiffrement masqué reçu à l'aide de la fonction de signature pseudo-homomorphique (Sign),
        - la transmission (E64) par le serveur de la deuxième donnée de signature au dispositif client,

    ledit jeton de signature étant obtenu à partir de ladite deuxième donnée de signature à l'aide de la deuxième donnée de masque.

17. Procédé d'authentification selon la revendication précédente, dans lequel, ledit dispositif client vérifie la validité de la signature de ladite deuxième donnée de signature.

18. Procédé d'authentification selon l'une des revendications 4 à 17, dans lequel les fonctions de chiffrement et de signature sont des fonctions asymétriques.

19. Procédé d'authentification selon la revendication précédente, comprenant lors d'une phase d'initialisation la mise en oeuvre par le serveur des étapes de :

    - génération (E1) d'une paire de clés asymétriques de signature (pkSign, skSign) pour mettre en oeuvre la fonction de signature pseudo-homomorphique (Sign) ;
    - génération (E2) d'une paire de clés asymétriques de chiffrement (pkEnc, skEnc) pour mettre en oeuvre la fonction de chiffrement pseudo-homomorphique (Enc);
    - transmission (E3) de la clé publique de chiffrement de ladite paire de clés asymétriques de chiffrement (pkEnc) et de la clé publique de signature de ladite paire de clés asymétriques de signature (pkSign) de sorte à ce que le dispositif client réalise les chiffrements et puisse vérifier les jetons de signature émis par le serveur à l'aide desdites clés publiques et que le serveur réalise les déchiffrements et génère les jetons de signature à l'aide des clé privées desdites paires de clés asymétriques.

20. Procédé d'authentification selon la revendication précédente, dans lequel lesdites clés de chiffrement et/ou de signature sont associées à un identifiant du client détenteur du dispositif client.

21. Procédé d'authentification selon la revendication précédente, dans lequel lesdites clés de chiffrement et/ou de signature sont mises en correspondance avec un identifiant du client détenteur du dispositif client dans une base de données.

22. Procédé d'authentification selon la revendication 20, dans lequel lesdites clés de chiffrement et/ou de signature sont dérivées à partir d'un hash de l'identifiant du client détenteur du dispositif client.

23. Procédé d'authentification selon l'une des revendications 1 à 3 dans lequel le jeton d'authentification est généré en outre à l'aide d'une clé secrète d'utilisateur (k).

24. Procédé d'authentification selon la revendication précédente, dans lequel le jeton d'authentification est obtenu par chiffrement de la clé secrète d'utilisateur (k) et de la clé de génération de preuve P à l'aide d'une deuxième fonction de chiffrement pseudo-homomorphique (Enc2).

**25.** Procédé d'authentification selon la revendication précédente, dans lequel le dispositif client détient en outre un premier jeton chiffré (U1, U2) obtenu par chiffrement de la clé secrète d'utilisateur à l'aide d'une première fonction de chiffrement pseudo-homomorphique (Enc1) et comprenant en outre une étape de transmission (F11) par le dispositif client au serveur du premier jeton chiffré.

**26.** Procédé d'authentification selon la revendication précédente comprenant une étape de détermination (F81) d'un premier paramètre (t) par le dispositif client et d'un deuxième jeton chiffré (R1, R2) obtenu par chiffrement de la clé secrète d'utilisateur (k) et dudit premier paramètre (t) à l'aide de la première fonction de chiffrement pseudo-homomorphique (Enc1) et une étape de transmission (F11) par le dispositif client au serveur du deuxième jeton chiffré.

**27.** Procédé d'authentification selon la revendication précédente dans lequel :

- l'étape de génération (A1) d'une preuve de connaissance de l'élément secret (PIN) comprend la transmission d'un défi (r) (F7) par le serveur au dispositif client, et la génération par le dispositif client d'une donnée de signature (Z) obtenue à partir du premier paramètre (t), d'une première valeur de hash (c) et de la clé de génération de preuve masquée (P*β), ladite première valeur de hash (c) étant obtenue à partir du défi reçu (r), du premier jeton chiffré (U1, U2), du jeton d'authentification masqué (J') à l'aide de la première donnée de masque (β) et du deuxième jeton chiffré (R1, R2),
- l'étape de transmission (A2) au serveur par le dispositif client de ladite preuve de connaissance de l'élément secret comprend la transmission (F9) par le dispositif client, de ladite donnée de signature (Z) au serveur.

**28.** Procédé d'authentification selon la revendication précédente, dans lequel les étapes de vérification par le serveur de la validité du jeton d'authentification masqué reçu (A4) et de la validité de la preuve de connaissance (A6) comprennent :

- le calcul (F12) d'une deuxième valeur de hash (c') à partir du défi (r), du premier jeton chiffré (U1, U2), du jeton d'authentification masqué (J') et du deuxième jeton chiffré (R1, R2) reçus ;
- le calcul (F13) d'un premier jeton déchiffré (K') par déchiffrement du premier jeton chiffré (U1, U2) à l'aide de la première fonction de chiffrement pseudo-homomorphique (Enc1) ;
- le calcul (F14) d'une clé de vérification de preuve (T') par déchiffrement du jeton d'authentification masqué (J') à l'aide de la deuxième fonction de chiffrement pseudo-homomorphique (Enc2);
- le calcul (F15) d'un deuxième jeton déchiffré (R) par déchiffrement du deuxième jeton chiffré (R1, R2) à l'aide la première fonction de chiffrement pseudo-homomorphique (Enc1);
- la vérification de la validité du jeton d'authentification masqué reçu et de la preuve de connaissance à partir de la donnée de signature reçue (Z), du premier jeton déchiffré (K'), du deuxième jeton déchiffré (R), de la deuxième valeur de hash (c') et de la clé de vérification de preuve (T').

**29.** Produit programme d'ordinateur comprenant des instructions de code de programme pour l'exécution des étapes du procédé selon l'une quelconque des revendications précédentes lorsque ledit programme est exécuté sur un ordinateur.

**30.** Système comprenant :

- au moins un dispositif client et un serveur d'authentification du dispositif client à l'aide d'un élément secret (PIN) connu uniquement du dispositif client, ledit dispositif client étant configuré pour :

  - détenir un jeton d'authentification (J) généré à l'aide d'une fonction pseudo-homomorphique et à partir dudit élément secret (PIN),
  - générer une preuve de connaissance de l'élément secret (PIN) à partir d'une clé de génération de preuve (P) masquée avec une première donnée de masque (β), ladite première donnée de masque étant une donnée aléatoire non publique connue uniquement du dispositif client et ladite clé de génération de preuve (P) masquée étant fonction dudit élément secret (PIN),
  - transmettre au serveur ladite preuve de connaissance de l'élément secret générée,
  - transmettre au serveur le jeton d'authentification (J) masqué à l'aide de la première donnée de masque (β),

ledit serveur étant configuré pour :

  - recevoir ladite preuve de connaissance de l'élément secret (PIN) générée à partir de la clé de génération de preuve (P) masquée avec une première donnée de masque (β) et transmise par le dispositif client,
- recevoir le jeton d'authentification (J) masqué à l'aide de la première donnée de masque (β),
- vérifier la validité du jeton d'authentification masqué reçu,
- vérifier la validité de la preuve de connaissance par une preuve à divulgation nulle de connaissance prouvant la connaissance dudit élément secret par le dispositif client sans le divulguer.

**Patentansprüche**

1. Verfahren zum Authentifizieren einer Client-Vorrichtung bei einem Server mithilfe eines geheimen Elements (PIN), welches nur der Client-Vorrichtung bekannt ist, wobei die Client-Vorrichtung einen mithilfe einer pseudo-homomorphen Funktion und anhand des geheimen Elements (PIN) erzeugten Authentifizierung-Token (J) besitzt, wobei das Verfahren Schritte umfasst des:

   - Erzeugens (A1), durch die Client-Vorrichtung, eines Beweises über Kenntnis des geheimen Elements (PIN) anhand eines Beweiserzeugungsschlüssels (P), welcher mit ersten Maskendaten (β) maskiert ist, wobei die ersten Maskendaten nicht öffentliche Zufallsdaten sind, die nur der Client-Vorrichtung bekannt sind, und der maskierte Beweiserzeugungsschlüssel (P) eine Funktion des geheimen Elements (PIN) ist,
   - Übertragens (A2), durch die Client-Vorrichtung, des erzeugten Beweises über Kenntnis des geheimen Elements an den Server,
   - Übertragens (A3), durch die Client-Vorrichtung, des mithilfe der ersten Maskendaten (β) maskierten Authentifizierungs-Tokens (J) an den Server,
   - Verifizierens (A4), durch den Server, der Gültigkeit des empfangenen maskierten Authentifizierungs-Tokens,
   - Verifizierens (A6), durch den Server, der Gültigkeit des Kenntnisbeweises über einen Beweis mit null Kenntnisoffenlegung, welcher die Kenntnis des geheimen Elements durch die Client-Vorrichtung beweist, ohne dasselbe offenzulegen.

2. Authentifizierungsverfahren nach dem vorstehenden Anspruch, umfassend einen Schritt des Erhaltens (A5), durch den Server, eines Beweisverifizierungsschlüssels, welcher dem Beweiserzeugungsschlüssel zugeordnet ist, und wobei der Schritt des Verifizierens (A6) der Gültigkeit des Kenntnisbeweises ein Verifizieren, durch den Server, der Gültigkeit des Kenntnisbeweises mithilfe des erhaltenen Beweisverifizierungsschlüssels umfasst.

3. Authentifizierungsverfahren nach einem der vorstehenden Ansprüche, wobei der Server die Gültigkeit des Kenntnisbeweises (A6) anhand des empfangenen maskierten Authentifizierungs-Tokens verifiziert.

4. Authentifizierungsverfahren nach einem der vorstehenden Ansprüche, wobei der Authentifizierungs-Token (J) einen durch Verschlüsselung anhand des geheimen Elements (PIN) mithilfe einer pseudo-homomorphen Verschlüsselungsfunktion (Enc) erhaltenen Verschlüsselungs-Token (C) umfasst.

5. Authentifizierungsverfahren nach dem vorstehenden Anspruch, wobei:

   - der Authentifizierungs-Token (J) weiter einen Signatur-Token (S) umfasst, welcher dem Ergebnis der Signatur des Verschlüsselungs-Tokens (C) mithilfe einer pseudo-homomorphen Signaturfunktion (Sign) entspricht,
   - der Schritt des Übertragens des maskierten (A3) Authentifizierungs-Tokens (J) das Übertragen (E10), durch die Client-Vorrichtung, des im Besitz befindlichen, mithilfe der ersten Maskendaten (β) maskierten Verschlüsselungs-Tokens (C^ β) an den Server, und das Übertragen (E11), durch die Client-Vorrichtung, des im Besitz befindlichen, mithilfe der ersten Maskendaten (β) maskierten Signatur-Tokens (Sign(C) ^ β) an den Server umfasst;
   - der Schritt des Verifizierens des maskierten (A4) Authentifizierungs-Tokens das Verifizieren (E12), durch den Server, der Gültigkeit der Signatur des empfangenen maskierten Signatur-Tokens anhand des empfangenen maskierten Verschlüsselungs-Tokens umfasst.

6. Authentifizierungsverfahren nach einem der vorstehenden Ansprüche, wobei:

   - der Schritt des Erzeugens (A1) eines Beweises über Kenntnis des geheimen Elements (PIN) das Übertragen einer Herausforderung ("Challenge") (r) (E7) durch den Server an die Client-Vorrichtung, und das Erzeugen (E8), durch die Client-Vorrichtung, von durch Signieren der empfangenen Herausforderung (r) mithilfe des maskierten Beweiserzeugungsschlüssels (P) erhaltenen Signaturdaten (Z) umfasst,
- der Schritt des Übertragens (A2), durch die Client-Vorrichtung, des Beweises über Kenntnis des geheimen Elements an den Server das Übertragen (E9), durch die Client-Vorrichtung, der Signaturdaten (Z) an den Server umfasst.

7.  Authentifizierungsverfahren nach einem der Ansprüche 4 bis 6, wobei:

- der Schritt des Übertragens (A3) des maskierten Authentifizierungs-Tokens (J) das Übertragen (E10), durch die Client-Vorrichtung, des im Besitz befindlichen, mithilfe der ersten Maskendaten ($\beta$) maskierten Verschlüsselungs-Tokens (C^ $\beta$) an den Server umfasst,
- der Schritt des Erhaltens (A5) des Beweisverifizierungsschlüssels anhand des empfangenen maskierten Authentifizierungs-Tokens das Entschlüsseln (E13), durch den Server, des empfangenen maskierten Verschlüsselungs-Tokens mithilfe der pseudo-homomorphen Verschlüsselungsfunktion umfasst, sodass ein Beweisverifizierungsschlüssel erhalten wird,
- der Schritt des Verifizierens (A6) der Gültigkeit des Kenntnisbeweises das Verifizieren (E14), durch den Server, der Gültigkeit der Signatur der empfangenen Signaturdaten (Z) mithilfe des erhaltenen Beweisverifizierungsschlüssels umfasst.

8.  Authentifizierungsverfahren nach einem der Ansprüche 5 oder 7, weiter bei einer vorausgehenden Registrierungsphase Schritte umfassend des:

- Bestimmens (E4) des geheimen Elements durch die Client-Vorrichtung, und
- Erzeugens des Verschlüsselungs- (E5) und des Signatur-Tokens (E6).

9.  Authentifizierungsverfahren nach Anspruch 8, wobei bei der Registrierungsphase der Schritt des Bestimmens des geheimen Elements (E4) das Auswählen des geheimen Elements durch einen Client umfasst, welcher Besitzer der Client-Vorrichtung ist, und der Schritt des Erzeugens des Verschlüsselungs-Tokens (E5) das Erzeugen des Verschlüsselungs-Tokens durch die Client-Vorrichtung umfasst.

10. Authentifizierungsverfahren nach Anspruch 8, wobei bei der Registrierungsphase der Schritt des Bestimmens des geheimen Elements (E4) das Auswählen des geheimen Elements durch einen Client, welcher Besitzer der Client-Vorrichtung ist, und das Übertragen des ausgewählten geheimen Elements an den Server umfasst, und die Schritte des Erzeugens des Verschlüsselungs-(E5) und des Signatur-Tokens (E6) das Erzeugen des Verschlüsselungs-Tokens und des Signatur-Tokens durch den Server und das Übertragen (E53, E66) dieser Token an die Client-Vorrichtung umfassen.

11. Authentifizierungsverfahren nach einem der Ansprüche 8 bis 10, wobei der Schritt des Erzeugens eines Verschlüsselungs-Tokens (E5) das Berechnen (E51) eines Hash des geheimen Elements anhand einer Hash-Funktion, und das Verschlüsseln (E52) des Hash mithilfe der pseudo-homomorphen Verschlüsselungsfunktion (Enc) umfasst.

12. Authentifizierungsverfahren nach Anspruch 8, wobei der Schritt des Erzeugens des Verschlüsselungs-Tokens (E5) das Erzeugen, durch den Server, eines vorläufigen geheimen Elements (E54), das Erzeugen eines vorläufigen Verschlüsselungs-Tokens (E55) anhand des vorläufigen geheimen Elements, das Übertragen des vorläufigen geheimen Elements und des vorläufigen Verschlüsselungs-Tokens an die Client-Vorrichtung (E56), und das Erzeugen, durch die Client-Vorrichtung, eines Verschlüsselungs-Tokens (E57) anhand des vorläufigen Verschlüsselungs-Tokens, des vorläufigen geheimen Elements und des geheimen Elements (PIN) umfasst,
und wobei der Schritt des Erzeugens des Signatur-Tokens (E6) das Erzeugen, durch den Server, eines vorläufigen Signatur-Tokens (E67) durch Signieren des vorläufigen Verschlüsselungs-Tokens, das Übertragen des vorläufigen Signatur-Tokens (E68) an die Client-Vorrichtung, und das Erzeugen, durch die Client-Vorrichtung, eines Signatur-Tokens (E69) anhand des vorläufigen Signatur-Tokens, des vorläufigen geheimen Elements und des geheimen Elements (PIN) umfasst.

13. Authentifizierungsverfahren nach Anspruch 12, wobei das Erzeugen des vorläufigen Verschlüsselungs-Tokens (E55) das Berechnen eines Hash des vorläufigen geheimen Elements anhand einer Hash-Funktion, und das Verschlüsseln des Hash mithilfe der pseudo-homomorphen Verschlüsselungsfunktion (Enc) umfasst.

14. Authentifizierungsverfahren nach einem der Ansprüche 11 oder 13, wobei der Schritt des Berechnens eines Hash eines geheimen Elements das Berechnen eines Hash des geheimen Elements und von mindestens einem zusätzlichen geheimen Element anhand einer Hash-Funktion umfasst.

15. Authentifizierungsverfahren nach Anspruch 11 oder 13, wobei das Erzeugen eines Verschlüsselungs-Tokens anhand eines geheimen Elements σ mithilfe der folgenden Formel ausgeführt wird: C = Enc(g^P), wobei g ein Erzeuger einer Gruppe höherer Ordnung und P = h(s,σ) ist, wobei s eine Zufallszahl (sel), h eine Hash-Funktion ist, und σ dem geheimen Element (PIN) oder einem vorläufigen geheimen Element gleich sein kann.

16. Authentifizierungsverfahren nach einem der Ansprüche 8, 9, 11, 14, 15, wobei bei der Registrierungsphase:

   - der Schritt des Erzeugens des Verschlüsselungs-Tokens (E5) durch die Client-Vorrichtung ausgeführt wird,
   - und der Schritt des Erzeugens des Signatur-Tokens (E6) umfasst:
   - das Maskieren (E61) des Verschlüsselungs-Tokens mithilfe von zweiten Maskendaten α, die zufällig und nur der Client-Vorrichtung bekannt sind,
   - das Übertragen (E62) des maskierten Verschlüsselungs-Tokens an den Server,
   - das Erzeugen (E63), durch den Server, von zweiten Signaturdaten (Sm) durch Signieren des empfangenen maskierten Verschlüsselungs-Tokens mithilfe der pseudo-homomorphen Signaturfunktion (Sign),
   - das Übertragen (E64), durch den Server, der zweiten Signaturdaten an die Client-Vorrichtung,

   wobei der Signatur-Token anhand der zweiten Signaturdaten mithilfe der zweiten Maskendaten erhalten wird.

17. Authentifizierungsverfahren nach dem vorstehenden Anspruch, wobei die Client-Vorrichtung die Gültigkeit der Signatur der zweiten Signaturdaten verifiziert.

18. Authentifizierungsverfahren nach einem der Ansprüche 4 bis 17, wobei die Verschlüsselungs- und Signaturfunktion asymmetrische Funktionen sind.

19. Authentifizierungsverfahren nach dem vorstehenden Anspruch, welches bei einer Initialisierungsphase das Umsetzen, durch den Server, der Schritte umfasst des:

   - Erzeugens (E1) eines asymmetrischen Signaturschlüsselpaares (pkSign, skSign), um die pseudo-homomorphe Signaturfunktion (Sign) umzusetzen;
   - Erzeugens (E2) eines asymmetrischen Verschlüsselungsschlüsselpaares (pkEnc, skEnc), um die pseudo-homomorphe Verschlüsselungsfunktion (Enc) umzusetzen;
   - Übertragens (E3) des öffentlichen Verschlüsselungsschlüssels des asymmetrischen Verschlüsselungsschlüsselpaares (pkEnc) und des öffentlichen Signaturschlüssels des asymmetrischen Signaturschlüsselpaares (pkSign), sodass die Client-Vorrichtung die Verschlüsselungen ausführt und die vom Server ausgestellten Signatur-Token mithilfe der öffentlichen Schlüssel verifizieren kann, und sodass der Server die Entschlüsselungen ausführt und die Signatur-Token mithilfe der privaten Schlüssel der asymmetrischen Schlüsselpaare erzeugt.

20. Authentifizierungsverfahren nach dem vorstehenden Anspruch, wobei der Verschlüsselungs- und/oder Signaturschlüssel einer Kennung des Clients zugeordnet sind, welcher Besitzer der Client-Vorrichtung ist.

21. Authentifizierungsverfahren nach dem vorstehenden Anspruch, wobei der Verschlüsselungs- und/oder Signaturschlüssel in einer Datenbank mit einer Kennung des Clients, welcher Besitzer der Client-Vorrichtung ist, in Entsprechung gebracht sind.

22. Authentifizierungsverfahren nach Anspruch 20, wobei der Verschlüsselungs- und/oder Signaturschlüssel anhand eines Hash der Kennung des Clients, welcher Besitzer der Client-Vorrichtung ist, abgeleitet sind.

23. Authentifizierungsverfahren nach einem der Ansprüche 1 bis 3, wobei der Authentifizierungs-Token weiter mithilfe eines geheimen Benutzerschlüssels (k) erzeugt wird.

24. Authentifizierungsverfahren nach dem vorstehenden Anspruch, wobei der Authentifizierungs-Token durch Verschlüsseln des geheimen Benutzerschlüssels (k) und des Beweiserzeugungsschlüssels P mithilfe einer zweiten pseudo-homomorphen Verschlüsselungsfunktion (Enc2) erhalten wird.

25. Authentifizierungsverfahren nach dem vorstehenden Anspruch, wobei die Client-Vorrichtung weiter einen ersten verschlüsselten Token (U1, U2) besitzt, welcher durch Verschlüsseln des geheimen Benutzerschlüssels mithilfe einer ersten pseudo-homomorphen Verschlüsselungsfunktion (Enc1) erhalten wird, und weiter einen Schritt des Übertragens (F11) des ersten verschlüsselten Tokens durch die Client-Vorrichtung an den Server umfassend.

26. Authentifizierungsverfahren nach dem vorstehenden Anspruch, umfassend einen Schritt des Bestimmens (F81) eines ersten Parameters (t) durch die Client-Vorrichtung, und eines zweiten verschlüsselten Tokens (R1, R2), welcher durch Verschlüsseln des geheimen Benutzerschlüssels (k) und des ersten Parameters (t) mithilfe der ersten pseudo-homomorphen Verschlüsselungsfunktion (Enc1) erhalten wird, und einen Schritt des Übertragens (F11) des zweiten verschlüsselten Tokens durch die Client-Vorrichtung an den Server.

27. Authentifizierungsverfahren nach dem vorstehenden Anspruch, wobei:

- der Schritt des Erzeugens (A1) eines Beweises über Kenntnis des geheimen Elements (PIN) das Übertragen einer Herausforderung (r) (F7) durch den Server an die Client-Vorrichtung, und das Erzeugen, durch die Client-Vorrichtung, von anhand des ersten Parameters (t) eines ersten Hash-Werts (c) und des maskierten Beweiserzeugungsschlüssels (P*β) erhaltenen Signaturdaten (Z), umfasst, wobei der erste Hash-Wert (c) anhand der empfangenen Herausforderung (r), des ersten verschlüsselten Tokens (U1, U2), des mithilfe der ersten Maskendaten (β) maskierten Authentifizierungs-Tokens (J') und des zweiten verschlüsselten Tokens (R1, R2) erhalten wird,
- der Schritt des Übertragens (A2), durch die Client-Vorrichtung, des Beweises über Kenntnis des geheimen Elements an den Server das Übertragen (F9), durch die Client-Vorrichtung, der Signaturdaten (Z) an den Server umfasst.

28. Authentifizierungsverfahren nach dem vorstehenden Anspruch, wobei die Schritte des Verifizierens, durch den Server, der Gültigkeit des empfangenen maskierten Authentifizierungs-Tokens (A4) und der Gültigkeit des Kenntnisbeweises (A6) umfassen:

- das Berechnen (F12) eines zweiten Hash-Werts (c') anhand der Herausforderung (r), des ersten verschlüsselten Tokens (U1, U2), des maskierten Authentifizierungs-Tokens (J') und des zweiten verschlüsselten Tokens (R1, R2), die empfangen wurden;
- das Berechnen (F13) eines ersten entschlüsselten Tokens (K') durch Entschlüsseln des ersten verschlüsselten Tokens (U1, U2) mithilfe der ersten pseudo-homomorphen Verschlüsselungsfunktion (Enc1);
- das Berechnen (F14) eines Beweisverifizierungsschlüssels (T') durch Entschlüsseln des maskierten Authentifizierungs-Tokens (J') mithilfe der zweiten pseudo-homomorphen Verschlüsselungsfunktion (Enc2) ;
- das Berechnen (F15) eines zweiten entschlüsselten Tokens (R) durch Entschlüsseln des zweiten verschlüsselten Tokens (R1, R2) mithilfe der ersten pseudo-homomorphen Verschlüsselungsfunktion (Enc1) ;
- das Verifizieren der Gültigkeit des empfangenen maskierten Authentifizierungs-Tokens und des Kenntnisbeweises anhand der empfangenen Signaturdaten (Z), des ersten entschlüsselten Tokens (K'), des zweiten entschlüsselten Tokens (R), des zweiten Hash-Werts (c') und des Beweisverifizierungsschlüssels (T').

29. Computerprogrammprodukt, umfassend Programmcodeanweisungen für das Ausführen der Schritte des Verfahrens nach einem der vorstehenden Ansprüche, wenn das Programm auf einem Computer ausgeführt wird.

30. System, umfassend:

- mindestens eine Client-Vorrichtung und einen Server zum Authentifizieren der Client-Vorrichtung mithilfe eines geheimen Elements (PIN), welches nur der Client-Vorrichtung bekannt ist, wobei die Client-Vorrichtung dafür konfiguriert ist:
- einen Authentifizierungs-Token (J) zu besitzen, welcher mithilfe einer pseudo-homomorphen Funktion und anhand des geheimen Elements (PIN) erzeugt wurde,
- einen Beweis über Kenntnis des geheimen Elements (PIN) anhand eines Beweiserzeugungsschlüssels (P), welcher mit ersten Maskendaten (β) maskiert ist, zu erzeugen, wobei die ersten Maskendaten nicht öffentliche Zufallsdaten sind, die nur der Client-Vorrichtung bekannt sind, und der maskierte Beweiserzeugungsschlüssel (P) eine Funktion des geheimen Elements (PIN) ist,
- den erzeugten Beweis über Kenntnis des geheimen Elements an den Server zu übertragen,
- den mithilfe der ersten Maskendaten (β) maskierten Authentifizierungs-Tokens (J) an den Server zu übertragen,

wobei der Server dafür konfiguriert ist:

- den anhand des mit ersten Maskendaten (β) maskierten Beweiserzeugungsschlüssels (P) erzeugten, und durch die Client-Vorrichtung übertragenen Beweis über Kenntnis des geheimen Elements (PIN) zu empfangen,
- den mithilfe der ersten Maskendaten (β) maskierten Authentifizierungs-Token (J) zu empfangen,
- die Gültigkeit des empfangenen maskierten Authentifizierungs-Tokens zu verifizieren,
- die Gültigkeit des Kenntnisbeweises über einen Beweis mit Null Kenntnisoffenlegung, welcher die Kenntnis des geheimen Elements durch die Client-Vorrichtung beweist, ohne dasselbe offenzulegen, zu verifizieren.

**Claims**

1. Method for authenticating a client device to a server using a secret element (PIN) known only by the client device, said client device having an authentication token (J) generated by means of a pseudo-homomorphic function and based on said secret element (PIN),
said method comprising the following steps:

   - generation (A1), by the client device, of proof of knowledge of the secret element (PIN) based on a proof generation key (P) masked with a first mask data item (β), said first mask data item being a non-public, random data item known only by the client device and said masked proof generation key (P) being dependent on said secret element (PIN),
   - transmission (A2) to the server by the client device, of said generated proof of knowledge of the secret element,
   - transmission (A3) to the server by the client device, of the authentication token (J) masked using the first mask data item (β),
   - verification (A4) by the server of the validity of the masked authentication token received,
   - verification (A6) by the server of the validity of the proof of knowledge by a zero-knowledge proof, proving the knowledge of said secret element by the client device without revealing it.

2. Authentication method according to the previous claim, comprising an acquisition step (A5) by the sever for acquiring a proof verification key associated with said proof generation key, and wherein the verification step (A6) for verifying the validity of the proof of knowledge comprises a verification by the server of the validity of the proof of knowledge using the proof verification key acquired.

3. Authentication method according to one of the previous claims, wherein the server verifies the validity of the proof of knowledge (A6) based on the masked authentication token received.

4. Authentication method according to one of the previous claims, wherein the authentication token (J) comprises an encryption token (C) acquired by encryption based on said secret element (PIN) using a pseudo-homomorphic encryption function (Enc).

5. Authentication method according to the previous claim, wherein:

   - the authentication token (J) further comprises a signature token (S) corresponding to the result of the signature of the encryption token (C) using a pseudo-homomorphic signature function (Sign),
   - the transmission step (A3) for transmitting the masked authentication token (J) comprises a transmission (E10), by the client device to the server, of the encryption token held (C^ β), masked using the first mask data item (β), and a transmission (E11), by the client device to the server, of the signature token held (Sign(C) ^ β), masked using the first mask data item (β);
   - the verification step for verifying the masked authentication token (A4) comprises a verification (E12) by the server, of the validity of the signature of the masked signature token received based on the masked encryption token received.

6. Authentication method according to one of the previous claims, wherein:

   - the generation step (A1) for generating proof of knowledge of the secret element (PIN) comprises the transmission of a challenge (r) (E7) by the server to the client device, and the generation (E8), by the client device, of a signature data item (Z) acquired by signing the received challenge (r) using said masked proof generation key (P),
   - the transmission step (A2) for transmitting, to the server by the client device, said proof of knowledge of the secret element comprises the transmission (E9), by the client device, of said signature data item (Z) to the server.

**7.** Authentication method according to one of claims 4 to 6, wherein:

- the transmission step (A3) for transmitting the masked authentication token (J) comprises a transmission (E10), by the client device to the server, of the encryption token held ($C^\beta$), masked using the first mask data item ($\beta$),
- the acquisition step (A5) for acquiring the proof verification key based on the masked authentication token received comprises a decryption (E13), by the server, of the received masked encryption token using the pseudo-homomorphic encryption function so as to acquire a proof verification key,
- the verification step (A6) for verifying the validity of the proof of knowledge comprises a verification (E14), by the server, of the validity of the received signature of the signature data item (Z) using the proof verification key acquired.

**8.** Authentication method according to one of claims 5 or 7, further comprising the following steps during a prior enrolment phase:

- the determination (E4) of the secret element by the client device, and
- the generation of the encryption (E5) and signature (E6) tokens.

**9.** Authentication method according to claim 8 wherein, during the enrolment phase, the secret element determination step (E4) comprises the selection of the secret element by a client in possession of the client device and the encryption token generation step (E5) comprises the generation of the encryption token by the client device.

**10.** Authentication method according to claim 8 wherein, during the enrolment phase, the secret element determination step (E4) comprises the selection of the secret element by a client in possession of the client device and the transmission of the selected secret element to the server, and the encryption (E5) and signature (E6) token generation steps comprise the generation of the encryption token and the signature token by the server and the transmission (E53, E66) of these tokens to the client device.

**11.** Authentication method according to one of claims 8 to 10, wherein the encryption token generation step (E5) comprises the calculation (E51) of a hash value of the secret element based on a hash function and the encryption (E52) of said hash using the pseudo-homomorphic encryption function (Enc).

**12.** Authentication method according to claim 8, wherein the encryption token generation step (E5) comprises the generation, by the server, of a temporary secret element (E54), the generation of a temporary encryption token (E55) based on the temporary secret element, the transmission of the temporary secret element and the temporary encryption token to the client device (E56) and the generation, by the client device, of an encryption token (E57) based on the temporary encryption token, the temporary secret element and the secret element (PIN),
and wherein the signature token generation step (E6) comprises the generation, by the server, of a temporary signature token (E67) by signing the temporary encryption token, the transmission of the temporary signature token (E68) to the client device, and the generation, by the client device, of a signature token (E69) based on the temporary signature token, the temporary secret element and the secret element (PIN).

**13.** Authentication method according to claim 12, wherein the generation of the temporary encryption token (E55) comprises the calculation of a hash of the temporary secret element based on a hash function and the encryption of said hash using the pseudo-homomorphic encryption function (Enc).

**14.** Authentication method according to one of claims 11 or 13, wherein the calculation step for calculating a hash of a secret element comprises the calculation of a hash of said secret element and of at least one additional secret element based on a hash function.

**15.** Authentication method according to claim 11 or 13, wherein the generation of an encryption token based on a secret element $\sigma$ takes place using the following formula: $C = Enc(g^P)$, where g is a high-order group generator and $P=h(s, \sigma)$ where s is a random number (sel), h is a hash function and where $\sigma$ can be equal to the secret element (PIN) or to a temporary secret element.

**16.** Authentication method according to one of claims 8, 9, 11, 14, 15 wherein, during the enrolment phase:

- the encryption token generation step (E5) is performed by the client device,

- and the signature token generation step (E6) comprises:

- the masking (E61) of said encryption token using a second, random mask data item $\alpha$ known only by the client device,
- the transmission (E62) of said masked encryption token to the server,
- the generation (E63), by the server, of a second signature data item (Sm) by signing the received masked encryption token using the pseudo-homomorphic signature function (Sign),
- the transmission (E64), by the server, of the second signature data item to the client device,

said signature token being acquired based on said second signature data item using the second mask data item.

17. Authentication method according to the previous claim, wherein said client device verifies the validity of the signature of said second signature data item.

18. Authentication method according to one of claims 4 to 17, wherein the encryption and signature functions are asymmetric functions.

19. Authentication method according to the previous claim comprising, during an initialisation phase, the implementation by the server of the following steps:

- the generation (E1) of a pair of asymmetric signature keys (pkSign, skSign) for implementing the pseudo-homomorphic signature function (Sign);
- the generation (E2) of a pair of asymmetric encryption keys (pkEnc, skEnc) for implementing the pseudo-homomorphic encryption function (Enc);
- the transmission (E3) of the public encryption key of said pair of asymmetric encryption keys (pkEnc), and of the public signature key of said pair of asymmetric signature keys (pkSign) so that the client device performs the encryptions and can verify the signature tokens emitted by the server using said public keys and so that the server performs the decryptions and generates the signature tokens using the private keys of said pairs of asymmetric keys.

20. Authentication method according to the previous claim, wherein said encryption and/or signature keys are associated with an identifier identifying the client in possession of the client device.

21. Authentication method according to the previous claim, wherein said encryption and/or signature keys are matched with an identifier identifying the client in possession of the client device in a database.

22. Authentication method according to claim 20, wherein said encryption and/or signature keys are derived from a hash of the identifier identifying the client in possession of the client device.

23. Authentication method according to one of claims 1 to 3, wherein the authentication token is also generated using a secret user key (k).

24. Authentication method according to the previous claim, wherein the authentication token is acquired by encryption of the secret user key (k) and of the proof generation key P using a second pseudo-homomorphic encryption function (Enc2).

25. Authentication method according to the previous claim, wherein the client device also has a first encrypted token (U1, U2) acquired by encrypting the secret user key using a first pseudo-homomorphic encryption function (Enc1) and further comprising a transmission step (F11) for transmitting the first encrypted token by the client device to the server.

26. Authentication method according to the previous claim, comprising a determination step (F81) for determining a first parameter (t) by the client device and a second encrypted token (R1, R2) acquired by encrypting the secret user key (k) and said first parameter (t) using the first pseudo-homomorphic encryption function (Enc1) and a transmission step (F11) for transmitting the second encrypted token by the client device to the server.

27. Authentication method according to the previous claim, wherein:

- the generation step (A1) for generating proof of knowledge of the secret element (PIN) comprises the transmission of a challenge (r) (F7) by the server to the client device, and the generation by the client device of a signature data item (Z) acquired based on the first parameter (t), a first hash value (c) and the masked proof generation key (P*β), said first hash value (c) being acquired based on the challenge received (r), the first encrypted token (U1, U2), the authentication token (J') masked using the first mask data item (β) and the second encrypted token (R1, R2),

- the transmission step (A2) for transmitting, to the server by the client device, said proof of knowledge of the secret element comprises the transmission (F9), by the client device, of said signature data item (Z) to the server.

28. Authentication method according to the previous claim, wherein the verification steps for verifying, by the server, the validity of the masked authentication token received (A4) and the validity of the proof of knowledge (A6) comprise:

- the calculation (F12) of a second hash value (c') based on the challenge (r), the first encrypted token (U1, U2), the masked authentication token (J') and the second encrypted token (R1, R2) received;
- the calculation (F13) of a first decrypted token (K') by decryption of the first encrypted token (U1, U2) using the first pseudo-homomorphic encryption function (Enc1);
- the calculation (F14) of a proof verification key (T') by decryption of the masked authentication token (J') using the second pseudo-homomorphic encryption function (Enc2);
- the calculation (F15) of a second decrypted token (R) by decryption of the second encrypted token (R1, R2) using the first pseudo-homomorphic encryption function (Enc1);
- the verification of the validity of the masked authentication token received and the proof of knowledge based on the signature data item received (Z), the first decrypted token (K'), the second decrypted token (R), the second hash value (c') and the proof verification key (T').

29. Computer program product comprising programme code instructions for executing the steps of the method according to any one of the previous claims, when said programme is run on a computer.

30. System comprising:

- at least one client device and a client device authentication server using a secret element (PIN) known only by the client device, said client device being configured to:
- hold an authentication token (J) generated by means of a pseudo-homomorphic function and based on said secret element (PIN),
- generate a proof of knowledge of the secret element (PIN) based on a proof generation key (P) masked with a first mask data item (β), said first mask data item being a non-public, random data item known only by the client device and said masked proof generation key (P) being dependent on said secret element (PIN),
- transmit to the server said proof of knowledge of the secret element generated,
- transmit to the server the authentication token (J) masked using the first mask data item (β),

said server being configured to:

- receive said proof of knowledge of the secret element (PIN), generated based on the proof generation key (P) masked with a first mask data item (β), and transmitted by the client device,
- receive the authentication token (J) masked using the first mask data item (β),
- verify the validity of the masked authentication token received,
- verify the validity of the proof of knowledge by a zero-knowledge proof, proving the knowledge of said secret element by the client device without revealing it.

# FIG. 1

| | |
|---|---|
| Initialisation | P1 |
| Enrôlement | P2 |
| Authentification | P3 |

# FIG. 2

| Serveur | | Client J |
| --- | --- | --- |

A1 — Génération preuve
de connaissance de PIN
à l'aide d'une clé
de génération de preuve $^\wedge\beta$

A2 — Preuve de connaissance

A3 — $J^\wedge\beta$

Vérification validité de $J^\wedge\beta$ — A4

Obtention clé de vérification — A5

Vérification validité
de la preuve de connaissance — A6

# FIG. 3

**Serveur**                    **Client**

Sign : (pkSign, skSign)    E1

Enc : (pkEnc, skEnc)    E2

E3 : pkSign, pkEnc    E3

# FIG. 4

Serveur

Sign : (pkSign, skSign)
Enc : (pkEnc, skEnc)

Client

pkSign, pkEnc

E4 — Sélection PIN

E5

E51 — $P = h(s, PIN)$

E52 — $C = Enc(g^P, pkEnc)$

E6

E61 — $C^\alpha$

E62 — $C^\alpha$

$Sm = Sign (C^\alpha, skSign)$ — E63

E62 — $Sm$    S

# FIG. 5

| Serveur | Client |
|---|---|
| Sign : (pkSign, skSign)<br>Enc : (pkEnc, skEnc) | pkSign, pkEnc |

E4

PIN       Sélection PIN

E5

$P = h(s, PIN)$   E51

$C = Enc(g^P, pkEnc)$   E52

E53   C

E6

$S = Sign(C, skSign)$   E65

E66   S

# FIG. 6

# FIG. 7

| Serveur | Client |
|---|---|
| Sign : (pkSign, skSign)<br>Enc : (pkEnc, skEnc) | pkSign, pkEnc<br>C, (Sm et α) ou S |

E7 — r →

E8 — Z

E9 ← Z

E10 ← C^β

E11 ← S^β

Vérification validité de S^β avec C^β — E12

Déchiffrement de C^β — E13

Vérification validité de Z — E14

# FIG. 8

| Serveur | Client |
|---|---|
| Sign : (pkSign, skSign)<br>Enc : (pkEnc, skEnc) | pkSign, pkEnc<br>C, (Sm et α) ou S |

E7    r

E8    Z

E9    Z

E10    $C^{\wedge}\beta$

E11    $S^{\wedge}\beta$

Vérification validité de $S^{\wedge}\beta$ avec $C^{\wedge}\beta$   E12

Déchiffrement de $C^{\wedge}\beta$   E13

Vérification validité de Z   E14

# FIG. 9

Serveur

Sign : (pkSign, skSign)
Enc : (pkEnc, skEnc)

Client

pkSign, pkEnc
C, (Sm et α) ou S

E7 — d — r

E8 — Z

E9 — Z

E10 — $C^\beta$

E11 — $S^\beta$

Vérification validité de $S^\beta$ avec $C^\beta$ — E12

Déchiffrement de $C^\beta$ — E13

Vérification validité de Z — E14

## FIG. 10

| Serveur | k | Client |
|---|---|---|
| Enc1 : (u, U)<br>Enc 2: (v, V) | | J = (V1, V2) = Enc2 ([kP]*G, V)<br>(U1, U2) = Enc1 ([k]*G, U) |

F7     r →

F8

F80   (U1', U2') = random (U1, U2)

F81   t ; (R1, R2) = Enc1 ([t k] * G, U)

F82   $J^\beta$

F83   c = H2(U1'||U2'||V1'||V2'||R1||R2||r)

F84   Z = t + c*P*$\beta$ mod p

F9    Z ←

F10   $J^\beta$ = J' =(V1', V2') ←

F11   (U1',U2'), (R1, R2) ←

c' = H2(U1'||U2'||V1'||V2'||R1||R2||r)   F12

K' = Enc1((U1', U2'), u)   F13

T' = Enc2((V1', V2'), v)   F14

R = Enc1((R1, R2), u)   F15

Z * K' = R + [c'] * T'   F16

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **Y. YANG et al.** A New Approach for Anonymous Password Authentication. *Computer Security Applications Conférence (ACSAC),* 2009
- **ROSARIO GENNARO ; JONATHAN KATZ ; HUGO KRAWCZYK ; TAL RABIN.** Secure network coding over the integers. *Public Key Cryptography,* 2010, 142-160
- **TAHER EL GAMAL.** A public-key cryptosystem and a signature scheme based on discrete logarithms. *IEEE Transactions on Information Theory,* vol. 31 (4), 469-472
- **PASCAL PAILLIER.** Public-key cryptosystems based on composite degree residuosity classes. *EUROCRYPT,* 1999, 223-238